# EUROPEAN PATENT APPLICATION

(11) **EP 3 490 112 A1**
(43) Date of publication of application: **29.05.2019**
(21) Application number: 18813340.9
(22) Date of filing: 07.02.2018
(51) Int. Cl.: H02K 1/27

(54) **ROTOR AND ROTARY MACHINE**

(30) Priority: 05.06.2017 JP 2017111104
(71) Applicant: Top Co., Ltd., Echizen city, Fukui 915-0861 (JP)
(72) Inventor: AMAYA, Yuji, Echizen-shi Fukui 915-0861 (JP); IIDA, Kazuya, Echizen-shi Fukui 915-0861 (JP); SASAKI, Kenji, Echizen-shi Fukui 915-0861 (JP)
(74) Representative: Dennemeyer & Associates S.A.
(86) International application number: PCT/JP2018/004276
(87) International publication number: WO 2018/225296

(57) **Abstract**

In a rotating body (32) of a rotor (30), a plurality of permanent magnets (45) are arranged in a circumferential direction, alternating with a plurality of divided cores (33). The plurality of permanent magnets (45) is in surface contact with side surfaces of the divided cores (33) in the circumferential direction in a state where facing magnetic pole faces of two permanent magnets (45) arranged on both sides of each divided core (33) in the circumferential direction are homopolar. In a resin covering portion (50) of the rotating body (32), a first part (51) and a second part (52) cover end surfaces of the plurality of permanent magnets (45), a plurality of third parts (53) covers outer peripheral surfaces of the plurality of permanent magnets (45), and a fourth part (54) covers inner peripheral surfaces of the plurality of divided cores (33) and inner peripheral surfaces of the plurality of permanent magnets (45). Outer peripheral surfaces of the divided cores (33) are exposed without being covered by the covering portion (50).

## Description

### TECHNICAL FIELD

The present invention relates to a rotor of a rotary machine such as a motor or an electrical generator, and the rotary machine.

### BACKGROUND ART

A technique related to a rotary machine has been proposed. For example, an interior permanent magnet motor is disclosed in Patent Literature 1. A rotator of the interior permanent magnet motor integrally includes a shaft, permanent magnets, and a plurality of electric steel sheets. The shaft, the permanent magnets, and the plurality of electric steel sheets are molded by resin injection insertion. The shaft is made of stainless steel. The plurality of electric steel sheets form pole shoes separated according to the magnetic poles. The electric steel sheets have a fan shape divided according to the magnetic poles, and are bonded in a state of being laminated in an axial direction. The rotator has 10 poles. In the rotator, the permanent magnets are radially provided on both sides of a magnetic pole portion formed of the electric steel sheets. An entire outer periphery of the rotator is covered with resin. The resin fills on inner sides of the electric steel sheets and the permanent magnets. In the rotator, a permanent magnet holding member may be mounted on each side of the electric steel sheets in the axial direction. In a method for manufacturing the rotator, the shaft, the permanent magnets, and the plurality of electric steel sheets are integrated using an adhesive, and are molded by resin injection insertion.

A rotating electrical machine is disclosed in Patent Literature 2. In the rotating electrical machine, a rotor includes a shaft, a rotor core, a plurality of first permanent magnets, a plurality of second permanent magnets, and plates. The rotor core includes a plurality of first core portions, and a plurality of second core portions. Each first core portion functions as the N pole of the rotor, and each second core portion functions as the S pole of the rotor. The plurality of first core portions and the plurality of second core portions are alternately arranged at substantially equiangular intervals along a circumferential direction. The plurality of first permanent magnets and the plurality of second permanent magnets are provided inside the rotor core, radially from an inner peripheral portion side toward an outer peripheral portion side. The first and second permanent magnets are arranged adjacent to each other between each first core portion and the corresponding second core portion. Inner peripheral surfaces of the first permanent magnet and the second permanent magnet are arranged at positions spaced radially outward from an outer peripheral surface of the shaft. A gap is provided on the inner peripheral surface side of these permanent magnets. An adhesive layer fills the gap. In addition to the adhesive layer, a ring member made of resin may fills the gap. The adhesive layer fills a gap between the first permanent magnet and the first core portion, a gap between the second permanent magnet and the second core portion, a gap between the first permanent magnet and the second permanent magnet, a gap between the first permanent magnet and a magnet covering portion of the first core portion, and a gap between the second permanent magnet and a magnet covering portion of the second core portion. The rotor core, the first permanent magnet, and the second permanent magnet are sandwiched between two plates from both sides in an axial direction. Each plate is formed of a non-magnetic material such as stainless steel or resin.

A rotor of a synchronous motor is disclosed in Patent Literature 3. In the rotor, rotor cores and magnets are alternately provided in a circumferential direction. Resin for molding fills between an inner peripheral surface of the rotor and an outer peripheral surface of an output shaft. The previously-described resin overflows from a gap between the magnet and the rotor core onto the surface of the rotor. At the time of filling the resin, a cylindrical jig case covers an outer side of the rotor. Consequently, the overflowing resin is contained in the maximum outer diameter of the rotor.

A rotor core of a rotator for a permanent magnet rotating motor is disclosed in Patent Literature 4. Eight pole pieces, eight grooves, and eight round grooves are formed in the rotor core. An arc-shaped linking portion is formed at an outer peripheral end of each pole piece. The pole pieces are coupled. Eight permanent magnets and a shaft are mounted on the pole pieces. A space is formed between the shaft and each of inner peripheral end surfaces of the eight permanent magnets and the eight pole pieces. The space is continuous with the eight grooves. Aluminum fills the space and the eight grooves, which are continuous, to form a rotor. The eight linking portions are cut in the rotor. Consequently, the eight pole pieces are separated.

A permanent magnet rotator is disclosed in Patent Literature 5. The permanent magnet rotator includes a rotator iron core. The rotator iron core is configured in such a manner that pole pieces and permanent magnets are arranged radially on an outer periphery of a rotator shaft, and are formed into a cylindrical shape. The pole piece is formed by laminating laminate pieces made of fan-shaped steel sheets to a predetermined thickness. Each permanent magnet is provided between the pole pieces. A wedge-shaped projection is provided on a part where two planer surfaces of the pole piece intersect. A support portion is integrally molded by resin molding on the outer periphery of the rotator shaft. The support portion is provided with a wedge-shaped engagement groove. In the permanent magnet rotator, the projection and the engagement groove are engaged with each other. The support portion is integrally molded with a flange portion that supports one end of the rotator iron core. A keep plate is fixed to the rotator shaft at the other end of the rotator iron core. The keep plate is formed of a non-magnetic material.

A brushless motor is disclosed in Patent Literature 6. The brushless motor includes a rotor and a stator. The rotor has a rotor core and a plurality of magnets. The rotor core has a ring-shaped portion, a plurality of fan-shaped pole pieces, a plurality of magnet housing portions, and a plurality of first magnetic flux blocking portions. The ring-shaped portion is formed around a through-hole into which a rotation shaft is inserted. The plurality of pole pieces is formed radially from the ring-shaped portion. The plurality of magnet housing portions is formed radially between two adjacent pole pieces. The magnet housing portions are formed radially about the rotation axis of the rotor core. The magnets are housed in the magnet housing portions in such a manner that the same magnetic poles of adjacent magnets face each other in a circumferential direction of the rotor core. The magnet housing portion has a second magnetic flux blocking portion at an end on a rotation shaft side. The first magnetic flux blocking portions are formed on an outer side of the ring-shaped portion. The first magnetic flux blocking portion is formed between the second magnetic flux blocking portions adjacent to each other. The first magnetic flux blocking portions and the second magnetic flux blocking portions prevent a short circuit of magnetic flux from the plate-shaped magnets in the rotor core.

An interior permanent magnet rotating electrical machine is disclosed in Patent Literature 7. In a rotor of the interior permanent magnet rotating electrical machine, magnets are mounted in a rotor core. The rotor core is formed by laminating plate-shaped members. The plate-shaped member is made of a magnetic composite material. The magnetic composite material has a ferromagnetic portion and a feebly magnetic portion in the same member. The feebly magnetic portion of the plate-shaped member is formed by processing and heat treating a ferromagnetic material.

An interior permanent magnet rotor is disclosed in Patent Literature 8. In the rotor, two permanent magnets are paired to be arranged at equal angles in a circumferential direction. Magnet housing holes are formed in an axial direction in a rotor core of the rotor. Two permanent magnets forming one pole are housed and fixed in each housing hole. Two permanent magnets form a V-shape in which the two permanent magnets are apart from each other on an outer peripheral surface side. The rotor core is formed by laminating integral core sheets and divided core sheets alternately. Each divided core sheet includes a plurality of outer core pieces and a plurality of inner core pieces. Each outer core piece is fixed to an outer area surface of the integral core sheet. Each inner core piece is fixed to an inner area surface of the integral core sheet. In the rotor core, an outer bridge portion and an inner bridge portion are formed of a magnetic part of the integral core sheet, and a non-magnetic part of a gap created by the outer core piece and the inner core piece. The rotor core may be formed by laminating the integral core sheets and the divided core sheets, the numbers of which are different from each other, in a predetermined order. For example, in the rotor core, the plurality of divided core sheets may be laminated between the integral core sheet and the integral core sheet.

An interior magnet rotor is disclosed in Patent Literature 9. The interior magnet rotor includes a rotor core and a plurality of magnets. The rotor core is divided in a circumferential direction. The rotor core includes cutout portions on both divided surfaces. The cutout portions are hole portions in a state where the rotor cores are joined in a ring shape. The plurality of magnets is locked in the plurality of hole portions in a state where the polarities are alternated.

### CITATION LIST

### PATENT LITERATURE

Patent Literature 1: JP-A-2009-77469
Patent Literature 2: JP-A-2013-34344
Patent Literature 3: JP-A-H02-41645
Patent Literature 4: JP-UM-A-H06-29356
Patent Literature 5: JP-UM-A-H03-3148
Patent Literature 6: JP-A-2015-211624
Patent Literature 7: JP-A-2010-226785
Patent Literature 8: JP-A-2006-158008
Patent Literature 9: JP-A-2004-88908

### SUMMARY OF INVENTION

### PROBLEMS TO BE SOLVED BY THE INVENTION

A rotary machine is in practical use. The rotary machine includes a rotor. The rotor includes a permanent magnet inside a rotating body. The rotary machine of such a type is referred to as, for example, an interior permanent magnet rotary machine. The rotary machine includes a motor and an electrical generator. For example, in an interior permanent magnet motor, magnet torque and reluctance torque act on the rotor due to a magnetic flux from a stator. Hence, according to the interior permanent magnet motor, the previously-described two types of torque enable, for example, an increase in torque or a reduction in power consumption. The inventor has considered a structure that can reduce leakage magnetic flux in the rotor of the interior permanent magnet rotary machine. The reduction in leakage magnetic flux can increase the useful magnetic flux. At this point in time, the inventor conceived the structure of a rotor in which the permanent magnet can be fixed to a rotor core formed of electric steel sheets without rattling and displacement of the permanent magnet.

An object of the present invention is to provide a rotor of an interior permanent magnet rotary machine and the rotary machine that are capable of preventing a permanent magnet from rattling or being displaced while increasing the useful magnetic flux.

### SOLUTIONS TO THE PROBLEMS

An aspect of the present invention is a rotor of a rotary machine, the rotor including: a shaft being a rotation axis of the rotor; and a rotating body provided with the shaft, wherein the rotating body includes: a plurality of divided cores formed by laminating a plurality of first electric steel sheets, the plurality of divided cores being arranged in a circumferential direction, corresponding to a rotation direction of the rotor, with respect to a center of the shaft; a plurality of permanent magnets equal in number to the number of the plurality of divided cores, the plurality of permanent magnets being arranged in the circumferential direction, alternating with the plurality of divided cores; and a covering portion made of resin, the covering portion covering the plurality of permanent magnets, the plurality of permanent magnets is in surface contact with side surfaces of the divided cores in the circumferential direction in a state where facing magnetic pole faces of two permanent magnets arranged on both sides of each divided core in the circumferential direction are homopolar, the covering portion includes: a ring-shaped first part covering end surfaces of the plurality of permanent magnets on a first side in a lamination direction in which the plurality of first electric steel sheets is laminated; a ring-shaped second part covering end surfaces of the plurality of permanent magnets on a second side opposite to the first side in the lamination direction; a plurality of third parts that are equal in number to the number of the plurality of permanent magnets, correspond to the plurality of respective permanent magnets, are each provided between two divided cores adjacent to each other in the circumferential direction, and cover outer peripheral surfaces of the plurality of permanent magnets on an outer peripheral side in a radial direction with respect to the center of the shaft; and a cylindrical fourth part covering inner peripheral surfaces of the plurality of divided cores on an inner peripheral side in the radial direction, and inner peripheral surfaces of the plurality of permanent magnets on the inner peripheral side in the radial direction, in the covering portion, the first part, the second part, the plurality of third parts, and the fourth part are integrated with one another, and in the plurality of divided cores, outer peripheral surfaces of the divided cores on the outer peripheral side in the radial direction are exposed without being covered by the covering portion.

According to this rotor, the plurality of permanent magnets can be restrained by the covering portion. The plurality of permanent magnets can be prevented from moving in the radial direction and the lamination direction. In a rotor of a rotary machine, for example, the rotating body may have the following structure. The previously-described structure is a structure where parts of a rotor core provided on both sides of a permanent magnet in the circumferential direction are coupled by a coupling portion in the entire region in the lamination direction. The coupling portion, together with the previously-described parts of the rotor core, is formed of an electric steel sheet in the entire region in the lamination direction. However, in such a structure, magnetic flux from the permanent magnet flows through the previously-described coupling portion. In other words, a part of the magnetic flux from the permanent magnet becomes leakage magnetic flux. In the rotating body in the above rotor, the plurality of divided cores is not coupled by a magnetic material. Therefore, the leakage magnetic flux can be reduced. The distance between outer peripheral surfaces of the plurality of divided cores and an inner peripheral surface of a stator of the rotary machine can be reduced.

In the rotor, the rotating body may include a support portion provided on the inner peripheral side of the fourth part in the radial direction, the support portion supporting the shaft. According to the configuration, the shaft can be integrated with the rotating body via the support portion provided on the fourth part.

In the rotor, the rotating body may include a first ring-shaped core formed of a ring-shaped second electric steel sheet, the first ring-shaped core being in a state where the second electric steel sheet, together with the plurality of first electric steel sheets, is laminated in the lamination direction in the plurality of divided cores, the first ring-shaped core may include: a plurality of first core portions equal in number to the number of the plurality of divided cores, the plurality of first core portions being arranged at positions same as the positions of the plurality of divided cores in the circumferential direction and the radial direction; and a first coupling portion integral with the plurality of first core portions, the first coupling portion coupling the plurality of first core portions in the circumferential direction, the first coupling portion may be provided on an inner peripheral part of the first ring-shaped core, and the first ring-shaped core may be provided on end surfaces of the plurality of divided cores on one of the first side and the second side in the lamination direction, and may not be provided on end surfaces of the plurality of divided cores on the other of the first side and the second side in the lamination direction. In this case, the first ring-shaped core may be provided at a position between the end surface of each of the plurality of divided cores on the first side in the lamination direction and the end surface of each of the plurality of divided cores on the second side in the lamination direction, the position being identical in the lamination direction among the plurality of divided cores, and may be in a state where the second electric steel sheet is sandwiched between predetermined two of the plurality of first electric steel sheets in the plurality of divided cores. In addition, in the rotor, the rotating body may include a first ring-shaped core formed of a ring-shaped second electric steel sheet, the first ring-shaped core being in a state where the second electric steel sheet, together with the plurality of first electric steel sheets, is laminated in the lamination direction in the plurality of divided cores, the first ring-shaped core may include: a plurality of first core portions equal in number to the number of the plurality of divided cores, the plurality of first core portions being arranged at positions same as the positions of the plurality of divided cores in the circumferential direction and the radial direction; and a first coupling portion integral with the plurality of first core portions, the first coupling portion coupling the plurality of first core portions in the circumferential direction, the first coupling portion may be provided on an inner peripheral part of the first ring-shaped core, and the first ring-shaped core may be provided at a position between an end surface of each of the plurality of divided cores on the first side in the lamination direction and an end surface of each of the plurality of divided cores on the second side in the lamination direction, the position being identical in the lamination direction among the plurality of divided cores, and may be in a state where the second electric steel sheet is sandwiched between predetermined two of the plurality of first electric steel sheets in the plurality of divided cores.

According to each of the above-described configurations, the plurality of divided cores can be coupled by the first ring-shaped core. At the time of manufacturing the rotating body, the plurality of divided cores can be handled in an integrated state. The first electric steel sheet and the second electric steel sheet may be electric steel sheets of the same material, or electric steel sheets of different materials in terms of the material. The first electric steel sheet and the second electric steel sheet may be electric steel sheets with the same thickness, or electric steel sheets with different thicknesses.

In the rotor, the rotating body may include a second ring-shaped core formed of a ring-shaped third electric steel sheet, the second ring-shaped core being in a state where the third electric steel sheet, together with the plurality of first electric steel sheets, is laminated in the lamination direction in the plurality of divided cores, the second ring-shaped core may include: a plurality of second core portions equal in number to the number of the plurality of divided cores, the plurality of second core portions being arranged at positions same as the positions of the plurality of divided cores in the circumferential direction and the radial direction; and a second coupling portion integral with the plurality of second core portions, the second coupling portion coupling the plurality of second core portions in the circumferential direction, and the second coupling portion may be provided on an outer peripheral part of the second ring-shaped core. In this case, in the rotor, the second ring-shaped core may be provided on end surfaces of the plurality of divided cores on one of the first side and the second side in the lamination direction. Furthermore, in the rotor, the second ring-shaped core may be provided on end surfaces of the plurality of divided cores on the other of the first side and the second side in the lamination direction. In addition, in the rotor, the second ring-shaped core may be provided at a position between the end surface of each of the plurality of divided cores on the first side in the lamination direction and the end surface of each of the plurality of divided cores on the second side in the lamination direction, the position being identical in the lamination direction among the plurality of the divided cores, and may be in a state where the third electric steel sheet is sandwiched between predetermined two of the plurality of first electric steel sheets in the plurality of divided cores.

According to each of the above-described configurations, the plurality of divided cores can be coupled by the second ring-shaped core. At the time of manufacturing the rotating body, the plurality of divided cores can be handled in an integrated state. The first electric steel sheet and the third electric steel sheet may be electric steel sheets of the same material or electric steel sheets of different materials in terms of the material. The first electric steel sheet and the third electric steel sheet may be electric steel sheets with the same thickness, or electric steel sheets with different thicknesses.

Another aspect of the present invention is a rotary machine including any of the above-described rotors, and a stator. According to this rotary machine, the rotary machine having the above-described functions can be obtained.

### ADVANTAGEOUS EFFECTS OF THE INVENTION

According to the present invention, it is possible to obtain a rotor of an interior permanent magnet rotary machine and the rotary machine that are capable of preventing a permanent magnet from rattling or being displaced, while increasing the useful magnetic flux.

### BRIEF DESCRIPTION OF THE DRAWINGS

Fig. 1 is a perspective view illustrating an example of a schematic configuration of a motor as a rotary machine.
Fig. 2 is a perspective vie illustrating an example of a schematic configuration of a stator, a rotor, bearings, and brackets.
Fig. 3 is a plan view illustrating an example of a schematic configuration of the motor, omitting a part of the configuration.
Fig. 4 is a perspective view illustrating an example of a schematic configuration of a support portion, a plurality of permanent magnets, a plurality of divided cores, and a rotating body of the rotor.
Fig. 5 is a cross-sectional view illustrating a step of laminating first electric steel sheets and forming each divided core. A cutting position of the first electric steel sheets corresponds to line D-D illustrated in Fig. 4.
Fig. 6 is a perspective view illustrating an example of a schematic configuration of a covering portion. The upper row illustrates an entire configuration of the covering portion. The lower row illustrates a first part, a second part, a plurality of third parts, and a fourth part of the covering portion.
Fig. 7 is a perspective view illustrating an example of a schematic configuration of a coupled core and a rotating body of a first example of a first aspect.
Fig. 8 is a cross-sectional view taken along line E1-E1 illustrated in Fig. 7.
Fig. 9 is a perspective view illustrating an example of a schematic configuration of a coupled core and a rotating body of a second example of the first aspect.
Fig. 10 is a cross-sectional view taken along line E2-E2 illustrated in Fig. 9.
Fig. 11 is a perspective view illustrating an example of a schematic configuration of a coupled core of a second aspect.
Fig. 12 is a perspective view illustrating an example of a schematic configuration of a coupled core of a third aspect.
Fig. 13 is a perspective view illustrating an example of a schematic configuration of a coupled core and a rotating body of a fourth aspect.
Fig. 14 is a cross-sectional view taken along line F-F illustrated in Fig. 13.
Fig. 15 is a perspective view illustrating an example of a schematic configuration of a coupled core of a fifth aspect.
Fig. 16 is a perspective view illustrating an example of a schematic configuration of a coupled core of a sixth aspect.

### DESCRIPTION OF EMBODIMENTS

Embodiments for carrying out the present invention will be described with reference to the drawings. The present invention is not limited to the configurations described below, and various configurations can be employed based on the same technical idea. For example, a part of the configurations shown below may be omitted or may be replaced with another configuration or the like. Another configuration may be included.

### <Motor>

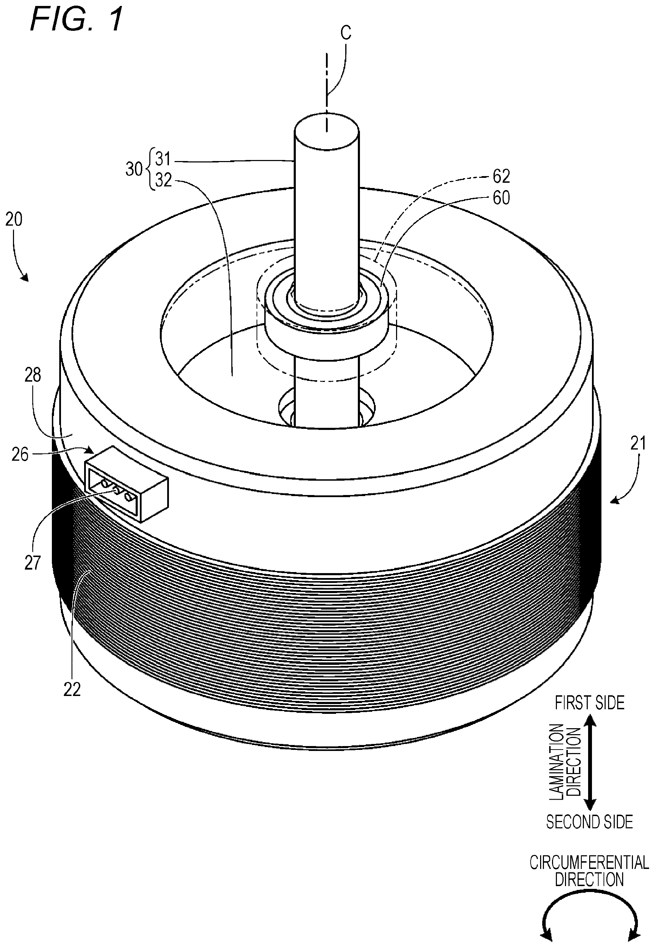

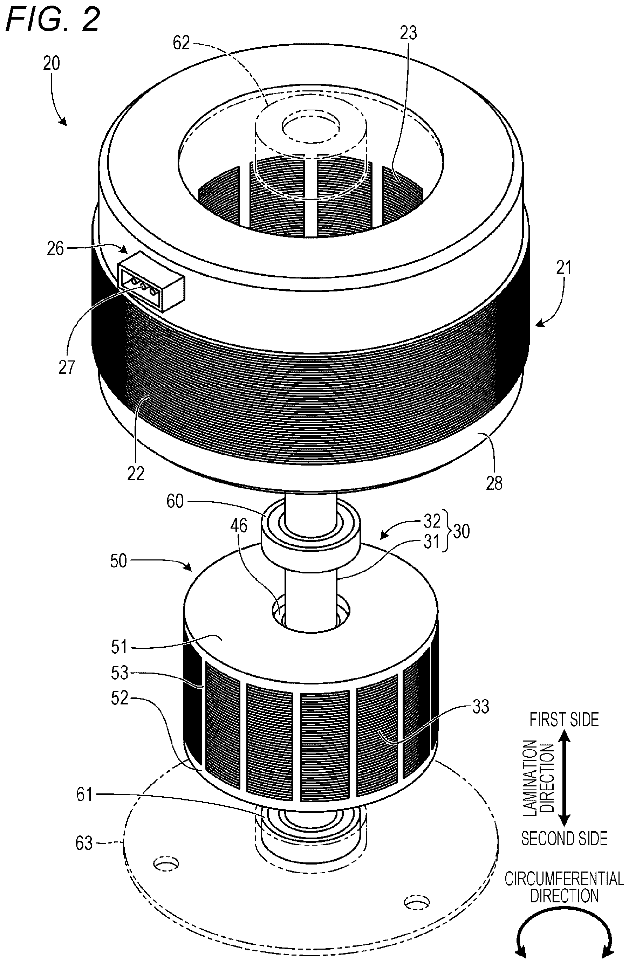

A motor 10 as a rotary machine is described with reference to Figs. 1 to 3. The motor 10 is mounted in various products. The motor 10 is used as, for example, a drive source that rotates a fan included in an air conditioner. In addition, the motor 10 is used as a drive source of a compressor. Furthermore, the motor 10 is used as a drive source of an electric vehicle. An electric car, an electric bicycle, an electric wheelchair, an electric cart, or an electric food trolley are examples of the electric vehicle. The electric car includes a hybrid car. The motor 10 is an interior permanent magnet brushless motor. The motor 10 is the brushless motor of an inner rotation type. The motor 10 includes a stator 20, a rotor 30, bearings 60 and 61, and brackets 62 and 63 (see Figs. 1 and 2). In Figs. 1 and 2, the brackets 62 and 63 are indicated by two-dot chain lines.

The stator 20 includes a stator core 21, a plurality of coils 24, an insulator 25, a connector 26, and a mold portion 28 (see Figs. 1 to 3). The stator core 21 is formed by, for example, while an electric steel sheet being a material is punched with a press machine, laminating the punched electric steel sheets of a predetermined shape. In an embodiment, a direction in which first electric steel sheets punched out from the electric steel sheet being the material are laminated is referred to as a "lamination direction." The first electric steel sheets form divided cores 33 of the rotor 30. The first electric steel sheets and the divided cores 33 are described below. Both sides in the lamination direction are referred to as a "first side" and a "second side." In the embodiment, the electric steel sheets of the predetermined shape punched out by the press machine are sequentially laminated on the first side in the lamination direction, after being punched out. A direction in which the punched out electric steel sheets are laminated in the stator core 21 agrees with the lamination direction. In other words, the direction in which the electric steel sheets are laminated in the stator core 21 and the direction in which the first electric steel sheets are laminated in the divided cores 33 are the same direction (lamination direction) in the motor 10.

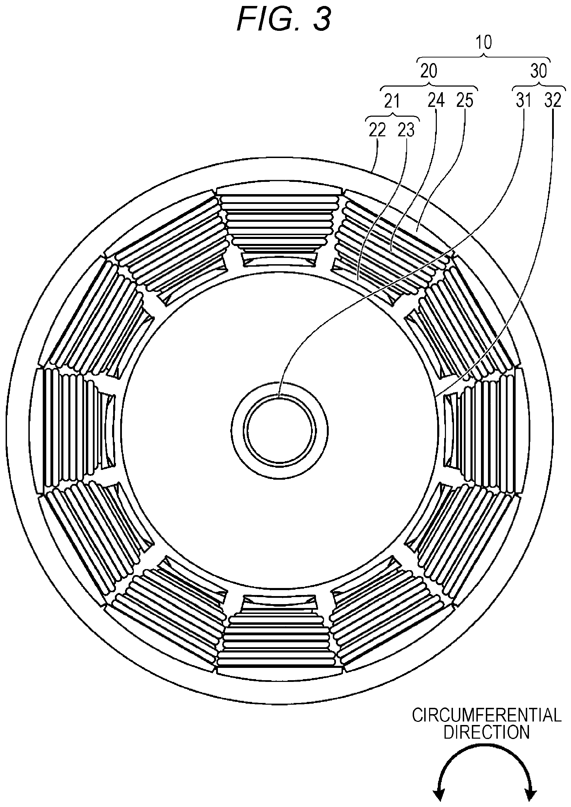

The stator core 21 includes a yoke 22 and a plurality of teeth 23 (see Fig. 3). In the stator core 21, the plurality of teeth 23 protrudes at equiangular intervals from the yoke 22 toward the rotor 30 side. Each coil 24 is provided to the corresponding tooth 23. The coil 24 is formed by winding a conducting wire around the tooth 23. At the time of forming the coil 24, the insulator 25 is mounted on the stator core 21. The insulator 25 electrically insulates the stator core 21 and the coil 24 from each other.

In the motor 10 exemplarily described in the embodiment, the number of the teeth 23 in the stator core 21 is 12. Therefore, the stator 20 includes 12 coils 24. The 12 coils 24 are classified into the coils 24 of the U phase, the V phase, and the W phase. In four coils 24 of the same phase, a crossover connects the coils 24. The crossover is formed of the conducting wire forming the coils 24. The coils 24 of each phase are connected in a predetermined system. For example, the coils 24 of each phase are star-connected. In a case of the star connection, a first lead wire of two lead wires of the coils 24 of each phase is connected to form a neutral point. A second lead wire of the two lead wires of the coils 24 of each phase is connected to a terminal 27 of the corresponding phase of the connector 26. The second lead wire and the terminal 27 may be connected via a connection member such as a printed circuit board or a bus bar. In Figs. 1 to 3, illustrations of the crossovers and illustrations of the first lead wire and the second lead wire are omitted. In Fig. 3, illustrations of the bearings 60 and 61 and the brackets 62 and 63 and illustrations of the connector 26 and the mold portion 28 are omitted.

The stator core 21 in the following state, together with the connector 26 including the terminals 27 to which the second lead wires are connected, is set in a state of being positioned in a mold of an injection molding machine. The stator core 21 in the previously-described state is a state where the coils 24 are provided via the insulator 25. The mold portion 28 is formed by resin molding with the injection molding machine. BMC (Bulk Molding Compound) is exemplarily described as the previously-described resin material. The mold portion 28 covers the stator core 21 that is provided with the coils 24 via the insulator 25 (see Figs. 1 and 2). However, an inner peripheral surface of each tooth 23 is exposed from the mold portion 28 (see Fig. 2). The inner peripheral surface of the tooth 23 is a surface, which faces the rotor 30 (an outer peripheral surface of a rotating body 32 described below), of the tooth 23. In the motor 10, an outer peripheral part of the stator core 21 is also exposed from the mold portion 28.

The connector 26 is provided to the mold portion 28. The connector 26 protrudes from the mold portion 28. The mold portion 28 is provided with the brackets 62 and 63. The bracket 62 is fixed to the mold portion 28 on the first side in the lamination direction. The bracket 63 is fixed to the mold portion 28 on the second side in the lamination direction. For example, the bracket 62 is fixed to the mold portion 28 in a state where an outer peripheral portion is buried in the mold portion 28. In this case, the above-described resin molding is performed in a state where the bracket 62, together with the stator core 21 and the connector 26, is set in the mold of the injection molding machine. The bracket 63 is screwed to an end surface of the mold portion 28 on the second side in the lamination direction. However, the brackets 62 and 63 may be fixed to the mold portion 28 by a method different from the previously-described method. Except for a plurality of through-holes formed in the bracket 63 through which screws for fastening pass, an illustration of the previously-described configuration for fastening with screws is omitted in Fig. 2. The stator 20 is similar to a stator of a motor (rotary machine) that is already in practical use. Therefore, the other descriptions related to the stator 20 are omitted.

### <Rotor>

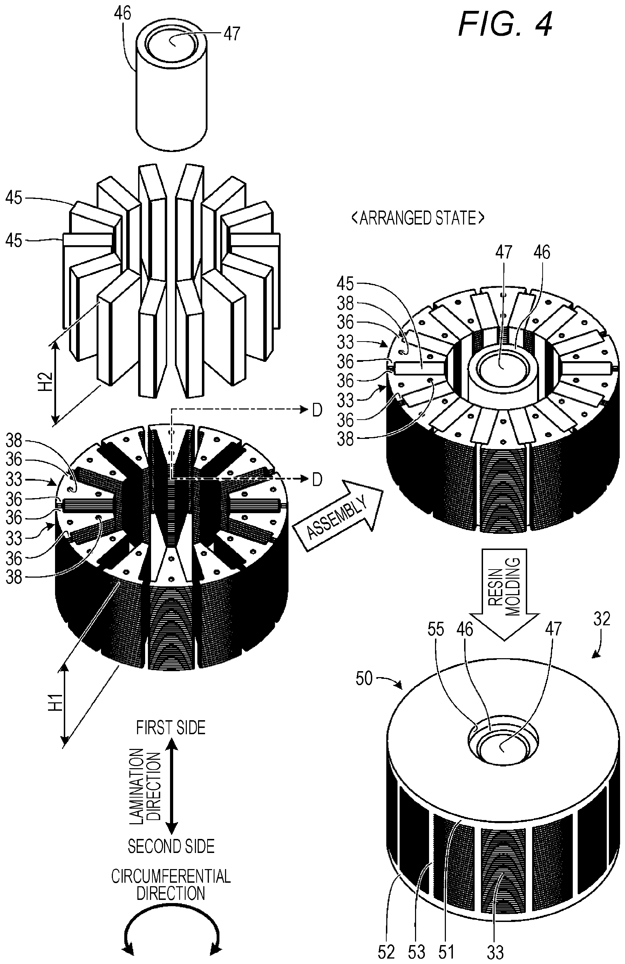

The rotor 30 is described with reference to Figs. 1 to 6. The rotor 30 includes a shaft 31 and the rotating body 32 (see Figs. 1 to 3). The rotating body 32 includes a plurality of divided cores 33, a plurality of permanent magnets 45, a support portion 46, and a covering portion 50 (see Fig. 4). In the rotor 30, the number of the divided cores 33 is equal to the number of the permanent magnets 45. In the motor 10 exemplarily described in the embodiment, the number of the divided cores 33 and the number of the permanent magnets 45 are both 14.

The shaft 31 is provided to the rotating body 32 (see Figs. 1 to 3). The shaft 31 is provided with the bearings 60 and 61 across the rotating body 32 in the lamination direction. The bearing 60 is provided on the first side in the lamination direction. The bearing 61 is provided on the second side in the lamination direction. In the motor 10, the bracket 62 supports the bearing 60 on the first side in the lamination direction, and the bracket 63 supports the bearing 61 on the second side in the lamination direction. Consequently, in the motor 10, the shaft 31 serves as a rotation axis of the rotor 30, and the rotor 30 is rotatably supported. In the embodiment, a circumferential direction with respect to a center C of the shaft 31 is referred to as a "circumferential direction." The circumferential direction corresponds to the rotation direction of the rotor 30. A radial direction with respect to the center C of the shaft 31 is referred to as a "radial direction." In the rotor 30, the shaft 31 is attached to a center portion of the rotating body 32 in the radial direction. A side closer to the center C of the shaft 31 in the radial direction is referred to as an "inner peripheral side," and a side away from the center C in the radial direction is referred to as an "outer peripheral side." For example, an inner peripheral surface or an inner peripheral part of a certain configuration is a surface or a part of the previously-described configuration on the inner peripheral side in the radial direction. An outer peripheral surface or an outer peripheral part of a certain configuration is a surface or a part of the previously-described configuration on the outer peripheral side in the radial direction. In the motor 10, the center C of the shaft 31 is along the lamination direction. A dot-and-dash line to which a reference sign C is assigned in Fig. 1 is a straight line corresponding to the center C of the shaft 31.

The plurality of divided cores 33 is arranged at equiangular intervals in the circumferential direction (see Fig. 4). The plurality of divided cores 33 forms a rotor core. Two projection portions 36 are provided to each divided core 33. The two projection portions 36 are formed on both side parts of the divided core 33 in the circumferential direction on the outer peripheral side of the rotating body 32 in the radial direction. The divided core 33 is formed by laminating the first electric steel sheets in the lamination direction. The first electric steel sheets have a fan-like shape. The divided core 33 is formed by, while an electric steel sheet being a material is punched into a fan shape with a press machine, laminating the fan-shaped first electric steel sheets. To fix a plurality of first electric steel sheets, for example, a method referred to as "caulking" is employed. In the field of rotary machines, the previously-described fixing method is also referred to as, for example, "twining".

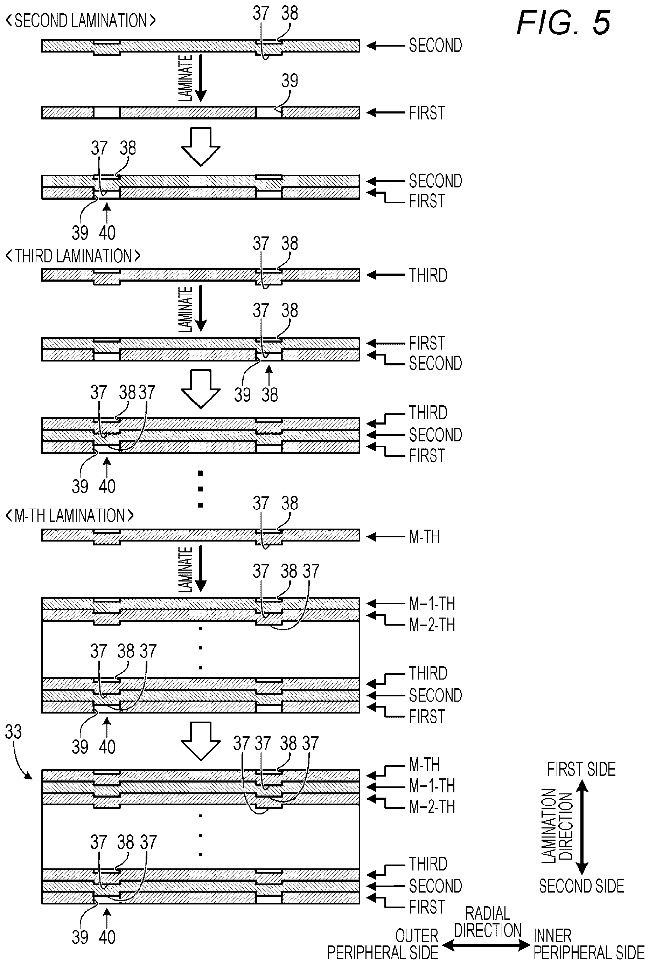

An example where the plurality of first electric steel sheets is fixed by caulking is described with reference to Fig. 5. This description will be made, given the following points. Each divided core 33 is formed by laminating M first electric steel sheets. Among the plurality of first electric steel sheets forming the divided core 33, the first electric steel sheet provided at an end on the second side in the lamination direction is set to be the first sheet, and the following first electric steel sheets are set to be the second, the third, ..., and the M-th sheets. The M-th first electric steel sheet is the first electric steel sheet provided at an end on the first side in the lamination direction of the plurality of first electric steel sheet forming the divided core 33.

When the plurality of first electric steel sheets is fixed by caulking, the second and subsequent first electric steel sheet includes protrusions 37. The protrusions 37 are provided at predetermined fixed positions on an end surface of the first electric steel sheet on the second side in the lamination direction. Each protrusion 37 protrudes toward the second side in the lamination direction. The protrusion 37 is formed by plastically deforming the first electric steel sheet. In each divided core 33, the protrusions 37 are formed in two places. A recess 38 corresponding to each protrusion 37 is formed at a position opposite to the protrusion 37 on an end surface of the first electric steel sheet on the first side in the lamination direction. The protrusion 37 and the recess 38 are formed at a timing when each of the second and subsequent first electric steel sheets is punched out from the electric steel sheet being the material. The protrusions 37 and the recesses 38 are not formed for the first first electric steel sheet. Parts at the previously-described fixed positions are punched out from the first first electric steel sheet to be hole portions 39 penetrating in the lamination direction. Each hole portion 39 is formed at a timing when the first first electric steel sheet is punched out from the electric steel sheet being the material. The protrusions 37 and the recesses 38, and the hole portions 39, which are illustrated in Fig. 5, are exemplifications, and may have different shapes from those in Fig. 5. One or both of the numbers and the arrangements of the protrusions 37 and the recesses 38, and the hole portions 39 may also be designed to be different from those in Fig. 5.

The protrusions 37 formed on the second first electric steel sheet are fitted into the hole portions 39 formed in the first first electric steel sheet (see "<second lamination>" in Fig. 5). Consequently, the first first electric steel sheet and the second first electric steel sheet are fixed. Next, the protrusions 37 formed on the third first electric steel sheet are fitted into the recesses 38 formed in the second first electric steel sheet (see "<third lamination>" in Fig. 5). Consequently, the second first electric steel sheet and the third first electric steel sheet are fixed. The fourth and subsequent first electric steel sheets are also fixed similarly to the second and third first electric steel sheets. Lastly, the protrusions 37 formed on the M-th first electric steel sheet are fitted into the recesses 38 formed in the M-1-th first electric steel sheet (see "<M-th lamination>" in Fig. 5). Consequently, the divided core 33 where the M number of first electric steel sheets have been laminated is manufactured.

Each permanent magnet 45 is a rare-earth magnet. However, the permanent magnet 45 may be a magnet of another material. The permanent magnet 45 may be, for example, a ferrite magnet. The permanent magnet 45 has a plate-like cuboid shape (see Fig. 4). The plurality of permanent magnets 45 is arranged at equiangular intervals in the circumferential direction. In other words, the plurality of permanent magnets 45 and the plurality of divided cores 33 are alternately arranged in the circumferential direction. In the embodiment, the state where the plurality of divided cores 33 and the plurality of permanent magnets 45 are alternately arranged in the circumferential direction is referred to as an "arranged state." Each of the plurality of permanent magnets 45 is in surface contact with side surfaces of the divided cores 33 in the circumferential direction in a state where the following magnetic pole faces are homopolar. Each of the previously-described magnetic pole faces is a side surface, which faces each other, of two permanent magnets 45 arranged on both sides of the divided core 33 in the circumferential direction. As for one predetermined permanent magnet 45 of the plurality of permanent magnets 45 in the arranged state, when the magnetic polarity of the magnetic pole face on a third side in the circumferential direction is the N pole, the magnetic polarity of the magnetic pole face on a fourth side in the circumferential direction is the S pole. The fourth side in the circumferential direction is opposite to the third side. In the embodiment, a description is given without specifying the third side and the fourth side in the circumferential direction. Each permanent magnet 45 sandwiched between two divided cores 33 adjacent to each other in the circumferential direction in the arranged state is in contact at corner portions on the outer peripheral side in the radial direction with surfaces of the projection portions 36 of the two divided cores 33 on the inner peripheral side in the radial direction. In the divided core 33 and the permanent magnet 45, dimensions H1 and H2 are set to be the same. The dimension H1 is the dimension of the divided core 33 in the lamination direction, and the dimension H2 is the dimension of the permanent magnet 45 in the lamination direction (see Fig. 4).

The support portion 46 is a cylindrical member where a through-hole 47 penetrating in the lamination direction is formed (see Fig. 4). The support portion 46 is made of, for example, metal. The support portion 46 is provided to a center portion of the rotating body 32 in the radial direction. The support portion 46 supports the shaft 31 (see Fig. 2). In other words, the shaft 31 is fitted through the through-hole 47, and is fixed to the support portion 46. The shaft 31 is fixed to the rotating body 32. The shaft 31 is integrated with the rotating body 32. Consequently, the rotor 30 is formed.

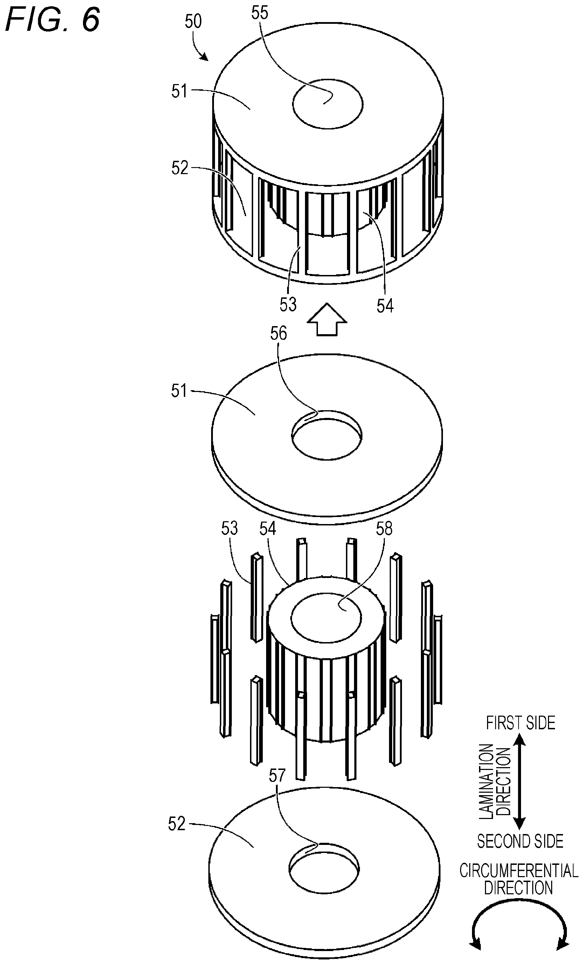

The covering portion 50 covers the plurality of permanent magnets 45 (see Fig. 4). The covering portion 50 does not have magnetic properties. The covering portion 50 is made of resin. BMC is exemplarily described as the resin material forming the covering portion 50. However, the covering portion 50 may be formed of a resin material different from BMC. The resin material forming the covering portion 50 is determined as appropriate, considering various conditions. The covering portion 50 is, for example, formed integrally by resin molding with an injection molding machine (see the upper row of Fig. 6). At the time of resin molding the covering portion 50, the plurality of divided cores 33, the plurality of permanent magnets 45, and the support portion 46 are set in a state of being positioned in a mold of the injection molding machine. In this case, the plurality of divided cores 33 and the plurality of permanent magnets 45 are in the arranged state in the mold and furthermore the support portion 46 is placed in a center portion in the radial direction of the plurality of divided cores 33 and the plurality of permanent magnets 45 in the arranged state (see "arranged state" in Fig. 4). Resin is then injected into the mold to form the integrated covering portion 50.

The covering portion 50 includes a first part 51, a second part 52, a plurality of third parts 53, and a fourth part 54 (see the lower row of Fig. 6). The first part 51, the second part 52, the plurality of third parts 53, and the fourth part 54 are integrated with one another (see the upper row of Fig. 6). The lower row of Fig. 6 indicates the first part 51, the second part 52, the plurality of third parts 53, and the fourth part 54 in a separated state for convenience of description. The first part 51 is a part of the covering portion 50 provided on the first side in the lamination direction. The first part 51 has a ring shape where a through-hole 56 is formed in the center in the radial direction. The first part 51 covers end surfaces of the plurality of permanent magnets 45 on the first side in the lamination direction. Furthermore, the first part 51 covers end surfaces of the plurality of divided cores 33 on the first side in the lamination direction. The second part 52 is a part of the covering portion 50 provided on the second side in the lamination direction. The second part 52 has a ring shape where a through-hole 57 is formed in the center in the radial direction. The second part 52 covers end surfaces of the plurality of permanent magnets 45 on the second side in the lamination direction. Furthermore, the second part 52 covers end surfaces of the plurality of divided cores 33 on the second side in the lamination direction.

The plurality of third parts 53 is linked to the first part 51, and is linked to the second part 52. In other words, the plurality of third parts 53 is integral at end portions on the first side in the lamination direction with an outer peripheral part of the first part 51, and is integral at end portions on the second side in the lamination direction with an outer peripheral part of the second part 52. The plurality of third parts 53 is provided at equiangular intervals in the circumferential direction, corresponding to the plurality of permanent magnets 45, on the outer peripheral side in the radial direction. In other words, the covering portion 50 includes the third parts 53 equal in number to the number of the plurality of permanent magnets 45. The plurality of third parts 53 correspond to the plurality of permanent magnets 45 and are each provided between two projection portions 36, which face each other in the circumferential direction, of two divided cores 33 adjacent to each other in the circumferential direction. The plurality of third parts 53 covers outer peripheral surfaces of the plurality of permanent magnets 45. In the rotor 30, between the previously-described two projection portions 36, is a gap along the lamination direction. Therefore, the third parts 53 each have a columnar shape along the lamination direction. Outer peripheral surfaces of the plurality of third parts 53, together with outer peripheral surfaces of the plurality of divided cores 33, form the outer peripheral surface of the rotating body 32. The outer peripheral surface of each third part 53 may have the same shape as the outer peripheral surface of each divided core 33. If the outer peripheral surface of the divided core 33 and the outer peripheral surface of the third part 53 are set to be, for example, curved surfaces with the same radius of curvature, the outer peripheral surface of the rotating body 32 is a circular cylindrical surface.

The fourth part 54 is linked to the first part 51, and is linked to the second part 52. In other words, the fourth part 54 is integral at an end portion on the first side in the lamination direction with an inner peripheral part of the first part 51, and is integral at an end portion on the second side in the lamination direction with an inner peripheral part of the second part 52. The fourth part 54 is provided in a space between the following inner peripheral surface and an outer peripheral surface of the support portion 46. The previously-described inner peripheral surface is a cylindrical surface formed of inner peripheral surfaces of the plurality of divided cores 33 and inner peripheral surfaces of the plurality of permanent magnets 45. Therefore, the fourth part 54 has a cylindrical shape where a through-hole 58 has been formed in the center in the radial direction. An outer peripheral surface of the fourth part 54 covers the inner peripheral surfaces of the plurality of divided cores 33 and the inner peripheral surfaces of the plurality of permanent magnets 45, and an inner peripheral surface thereof fixes the support portion 46. In the covering portion 50, the through-hole 56 of the first part 51, the through-hole 58 of the fourth part 54, and the through-hole 57 of the second part 52 are continuous in the lamination direction. Therefore, the covering portion 50 includes one through-hole 55 formed with the through-holes 56, 58, and 57 in a center portion in the radial direction.

### <Advantageous Effects of Embodiment

According to the embodiment, the following effects can be obtained.

(1) In the rotating body 32 of the rotor 30, the plurality of divided cores 33 and the plurality of permanent magnets 45 are alternately arranged in the circumferential direction (see Fig. 4). The plurality of permanent magnets 45 is in the following state in the rotating body 32. The previously-described state is a state where facing magnetic pole faces of two permanent magnets 45 arranged on both sides of each divided core 33 in the circumferential direction are homopolar. Each permanent magnet 45 is in surface contact with a side surface of the divided core 33 in the circumferential direction. The covering portion 50 includes the first part 51, the second part 52, the plurality of third parts 53, and the fourth part 54 (see Fig. 6). In the covering portion 50, the first part 51, the second part 52, the plurality of third parts 53, and the fourth part 54 are integrated with one another. The first part 51 covers the end surfaces of the plurality of permanent magnets 45 on the first side in the lamination direction. The second part 52 covers the end surfaces of the plurality of permanent magnets 45 on the second side in the lamination direction. The plurality of third parts 53 covers the outer peripheral surfaces of the plurality of permanent magnets 45. The fourth part 54 covers the inner peripheral surfaces of the plurality of divided cores 33 and the inner peripheral surfaces of the plurality of permanent magnets 45. In other words, in the rotating body 32, the plurality of permanent magnets 45 and the plurality of divided cores 33 are alternately arranged in the circumferential direction, and the covering portion 50 covers the plurality of permanent magnets 45 arranged in this manner (see Fig. 4). In the rotating body 32, the outer peripheral surfaces of the plurality of divided cores 33 are exposed without being covered by the covering portion 50.

Hence, the covering portion 50 can restrain the plurality of permanent magnets 45. The plurality of permanent magnets 45 can be prevented from moving in the radial direction and the lamination direction. In a rotor of a rotary machine, for example, it is also possible to cause a rotating body to have the following structure. The previously-described structure is a structure where parts of a rotor core provided on both sides of a permanent magnet in the circumferential direction are coupled by a coupling portion in the entire region in the lamination direction. The coupling portion, together with the previously-described parts of the rotor core, is formed of an electric steel sheet in the entire region in the lamination direction. However, in such a structure, magnetic flux from the permanent magnet flows through the previously-described coupling portion. In other words, a part of the magnetic flux from the permanent magnet becomes leakage magnetic flux. In the rotating body 32 in the rotor 30, the plurality of divided cores 33 is not coupled by a magnetic material. Therefore, the leakage magnetic flux can be reduced. The distance between the outer peripheral surfaces of the plurality of divided cores 33 and the inner peripheral surfaces of the teeth 23 can be reduced.

Although description is omitted in the above, the plurality of divided cores 33, together with the plurality of permanent magnets 45, is fixed by the covering portion 50 in the rotating body 32. In other words, in each divided core 33 where the plurality of first electric steel sheets is fixed by caulking, the recesses 38 are present in the end surface on the first side in the lamination direction, and recesses 40 are present in the end surface on the second side in the lamination direction (see Figs. 4 and 5). The recesses 40 are formed in the previously-described end surface in a state where the protrusions 37 on the second first electric steel sheet are fitted in the hole portions 39 (see Fig. 5). At the time of resin molding the covering portion 50, the resin material forming the covering portion 50 fills the recesses 38 and 40 formed in the end surfaces of the plurality of divided cores 33 on the first side and the second side in the lamination direction. The first part 51 including the parts of the resin filling the recesses 38 restrains the plurality of divided cores 33 on the first side in the lamination direction. The second part 52 including the parts of the resin filling the recesses 40 restrains the plurality of divided cores 33 on the second side in the lamination direction. The first part 51 and the second part 52 prevent the plurality of divided cores 33 from moving in the lamination direction. Furthermore, the first part 51 and the second part 52 prevent the plurality of divided cores 33 from moving in the radial direction, and prevent the plurality of divided cores 33 from moving in the circumferential direction. The movement of the plurality of divided cores 33 toward the inner peripheral side in the radial direction is also prevented by the fourth part 54. The movement of the plurality of divided cores 33 in the circumferential direction is also prevented by the plurality of permanent magnets 45, and is also prevented by the plurality of third parts 53 in contact with two projection portions 36 adjacent to each other in the circumferential direction.

(2) The rotating body 32 includes the support portion 46 (see Fig. 4). The support portion 46 supports the shaft 31 (see Fig. 2). Hence, the shaft 31 is integrated with the rotating body 32 via the support portion 46 (see Figs. 1 to 3).

### <Modifications>

The embodiment can also be configured as follows. Some configurations of modifications described below may also be employed in combination as appropriate. In the following description, points different from the above description are described, and description of similar points is omitted as appropriate.
(1) The rotary machine has been described, taking the motor 10 as an example. The above structure can also be employed for a rotor of an electrical generator as the rotary machine. In other words, in the rotor of the electrical generator, a rotating body includes a covering portion as in the above description (see Figs. 4 and 6). In the rotating body, a plurality of permanent magnets and a plurality of divided cores are alternately arranged in the circumferential direction, and the covering portion covers the plurality of permanent magnets arranged in this manner.
(2) Each divided core 33 is formed by laminating the plurality of first electric steel sheets (see Fig. 4). In the divided core 33, the plurality of first electric steel sheets is fixed by caulking (see Fig. 5). A method different from caulking may be employed as the method for fixing the plurality of first electric steel sheets. For example, a fixing method such as bonding or welding may be employed as the method for fixing the plurality of first electric steel sheets. In the fixing method by bonding, the plurality of first electric steel sheets is fixed with an adhesive. In the fixing method by welding, the plurality of first electric steel sheets is welded. The fixing methods by bonding and welding are techniques that are already in practical use. Hence, any other descriptions related to the fixing of the plurality of first electric steel sheets by bonding and welding are omitted.

When the plurality of first electric steel sheets is bonded or welded, the above-described recesses 38 and 40 are not formed in the divided core. Therefore, in the divided core, a recess corresponding to each recess 38 may be formed in an end surface on the first side in the lamination direction, and a recess corresponding to each recess 40 may be formed in an end surface on the second side in the lamination direction. A through-hole penetrating the divided core in the lamination direction may be formed. The resin material forming the covering portion 50 fills the previously-described recesses or through-hole. The divided core may be provided on the inner peripheral side in the radial direction with a part buried in the fourth part 54 of the covering portion 50 irrespective of the method for fixing the plurality of first electric steel sheets. In this case, a convex portion or concave portion may be formed on the previously-described part buried in the fourth part 54. The convex portion is engaged with the resin material forming the fourth part 54 inside the fourth part 54. The resin material forming the fourth part 54 enters the concave portion inside the fourth part 54. According to each of the previously-described configurations, the covering portion 50 restrains the plurality of divided cores to enable the prevention of the movement of the plurality of divided cores in one or all of the lamination direction, the radial direction, and the circumferential direction.

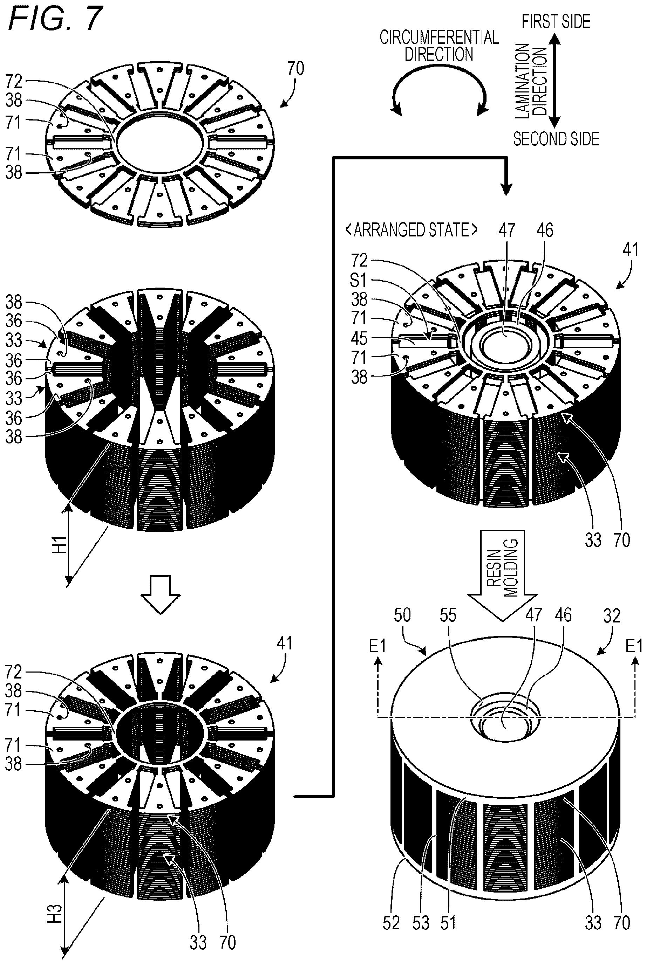

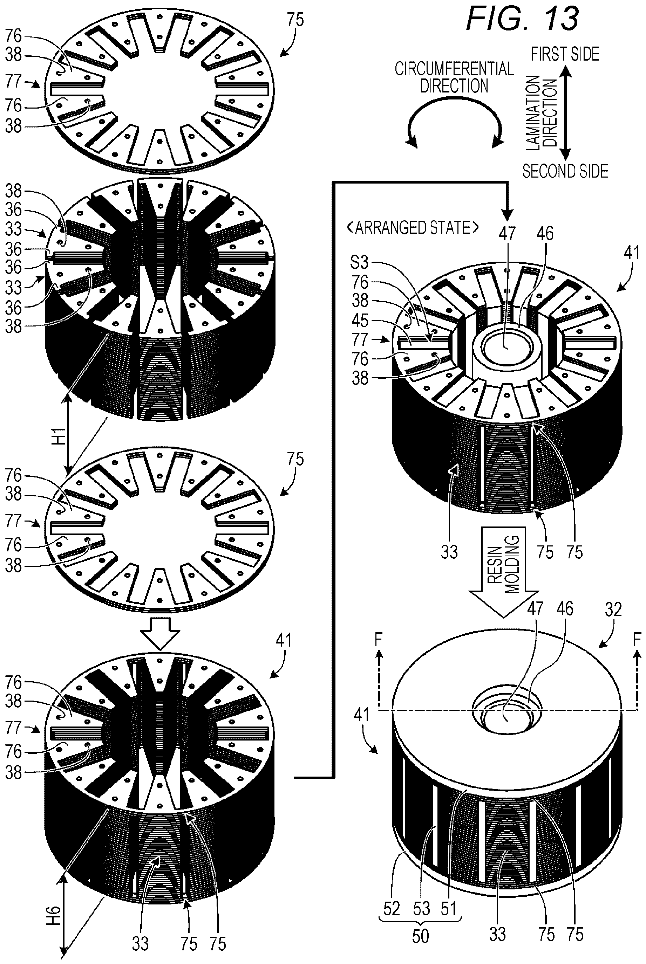

(3) In the rotor 30, the rotating body 32 is formed of the plurality of divided cores 33, the plurality of permanent magnets 45, the support portion 46, and the covering portion 50 (see Fig. 4). The rotating body 32 may be provided with a first ring-shaped core 70 (see Figs. 7 to 12). The first ring-shaped core 70 couples the plurality of divided cores 33. The rotating body 32 may be provided with a second ring-shaped core 75 (see Figs. 13 to 16). The second ring-shaped core 75 couples the plurality of divided cores 33. According to the first ring-shaped core 70 or the second ring-shaped core 75, the plurality of divided cores 33 can be handled in an integrated state at the time of manufacturing the rotating body 32. The first ring-shaped core 70 is formed of a second electric steel sheet. The second electric steel sheet is formed using the same electric steel sheet as the first electric steel sheet as a material. The second ring-shaped core 75 is formed of a third electric steel sheet. The third electric steel sheet is formed using the same electric steel sheet as the first electric steel sheet as a material. The second electric steel sheet and the third electric steel sheet are formed by punching, for example, the electric steel sheet being the material with the press machine, similarly to the first electric steel sheet. However, some or all of the first electric steel sheet, the second electric steel sheet, and the third electric steel sheet may use, as materials, electric steel sheets that are different from each other in one or both of material and thickness.

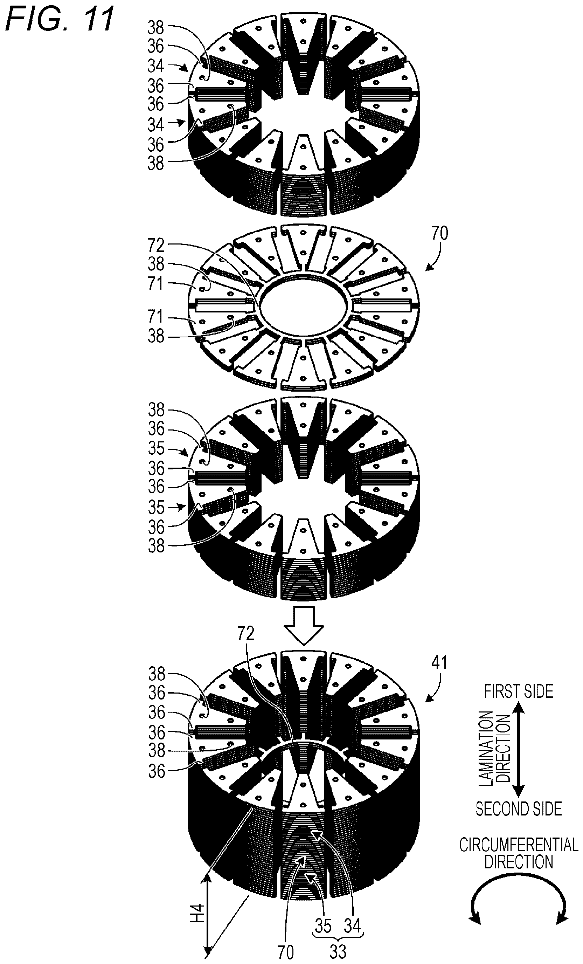

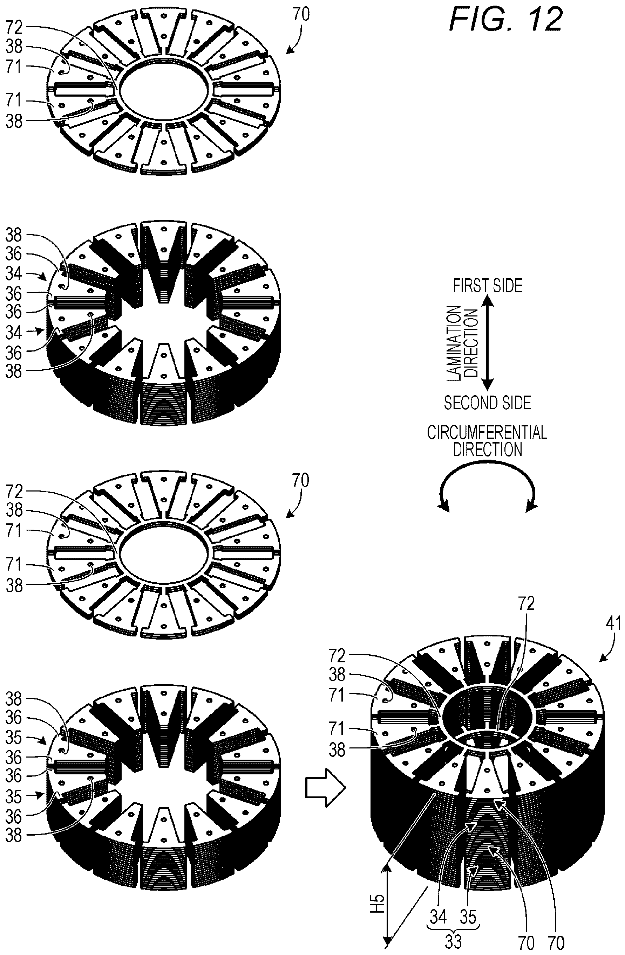

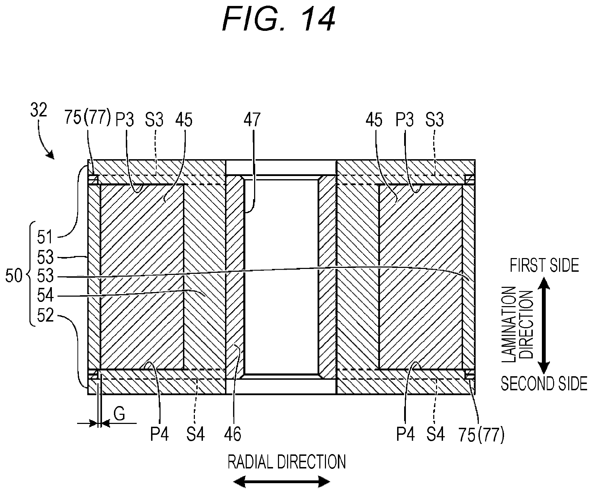

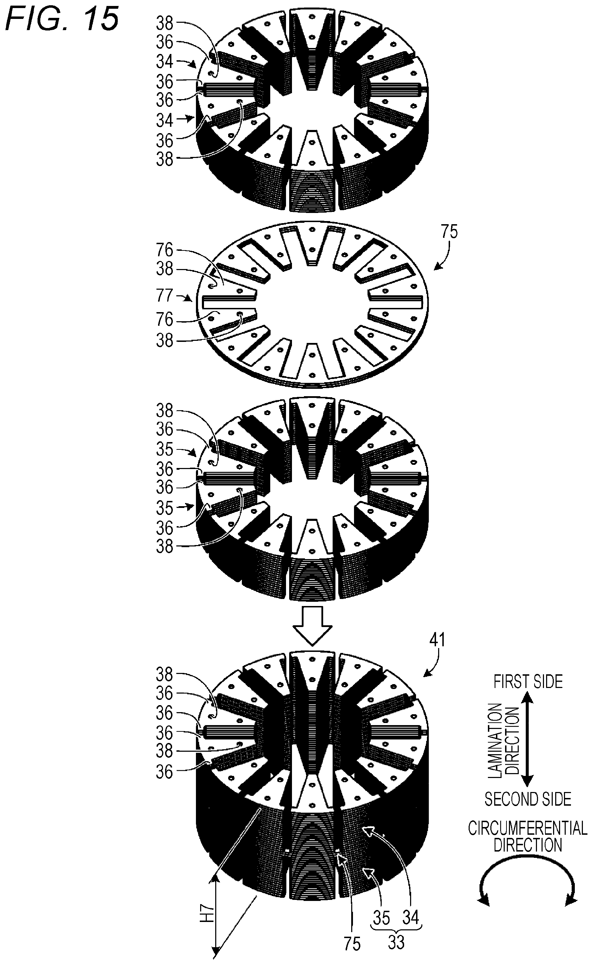

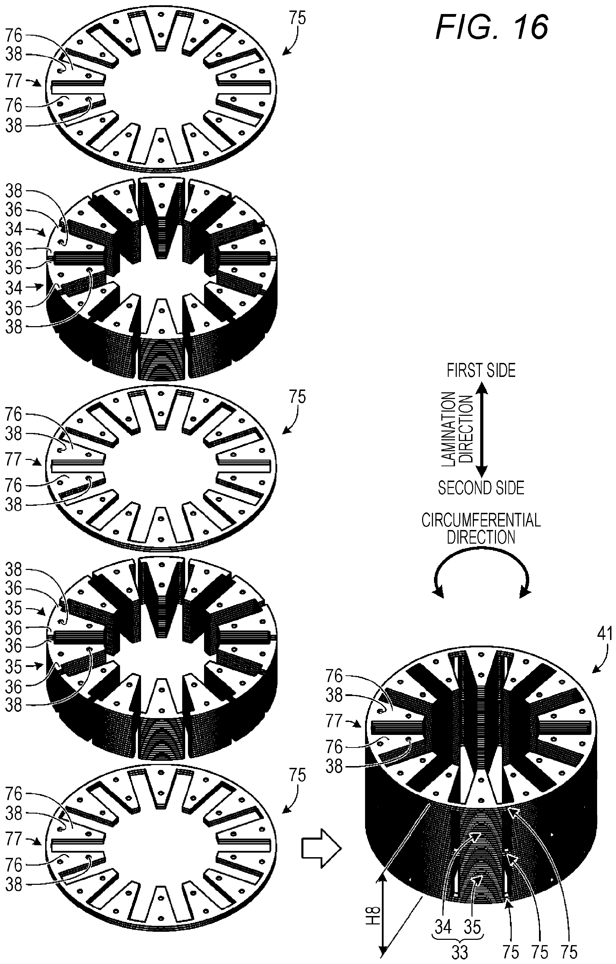

An integrated laminate where the plurality of divided cores 33 is coupled by the first ring-shaped core 70 or the second ring-shaped core 75 in the rotating body 32 is described below, taking six aspects of a first aspect to a sixth aspect as examples. In the descriptions of the first aspect to the sixth aspect, the names and the reference signs of portions are same as above to clarify the correspondence with the above-described portions illustrated in Figs. 1 to 6. However, the previously-described laminate is referred to as a "coupled core 41." The first aspect (see Figs. 7 to 10), the second aspect (see Fig. 11), and the third aspect (see Fig. 12) relate to the coupled core 41 where the plurality of divided cores 33 is coupled by the first ring-shaped core 70. The fourth aspect (see Figs 13 and 14), the fifth aspect (see Fig. 15), and the sixth aspect (see Fig. 16) relate to the coupled core 41 where the plurality of divided cores 33 is coupled by the second ring-shaped core 75.

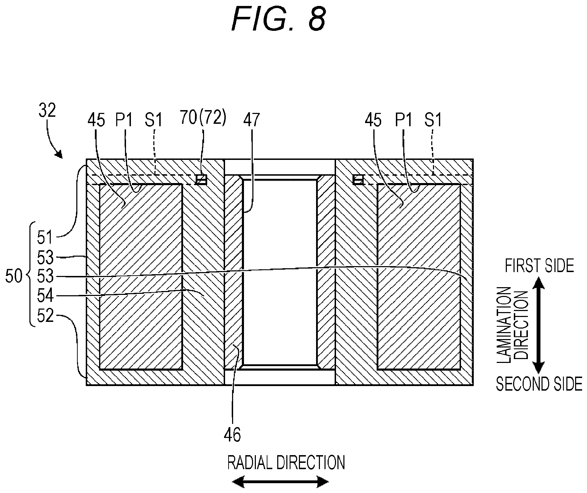

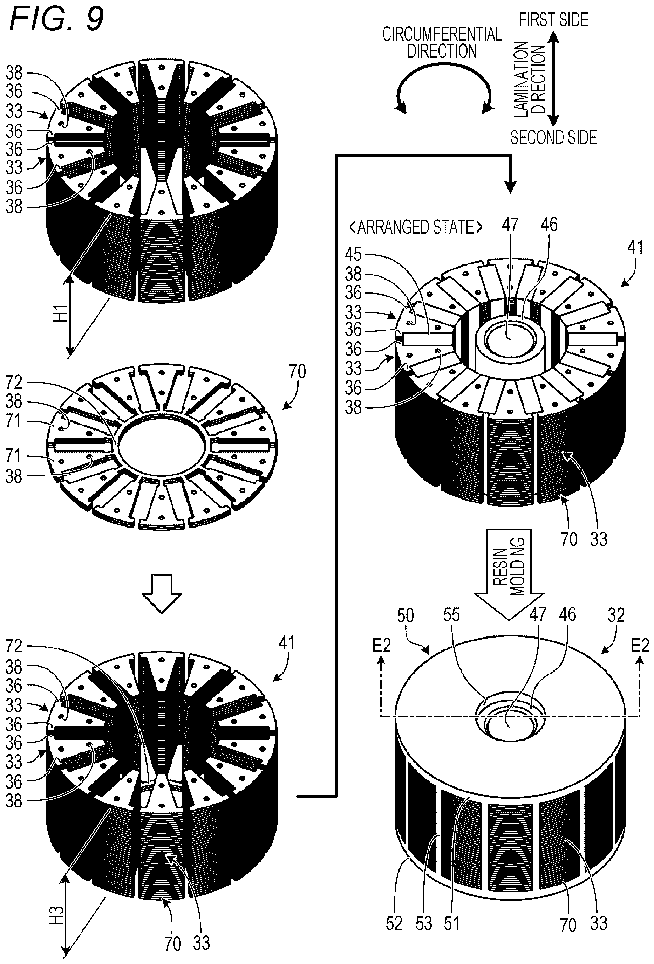

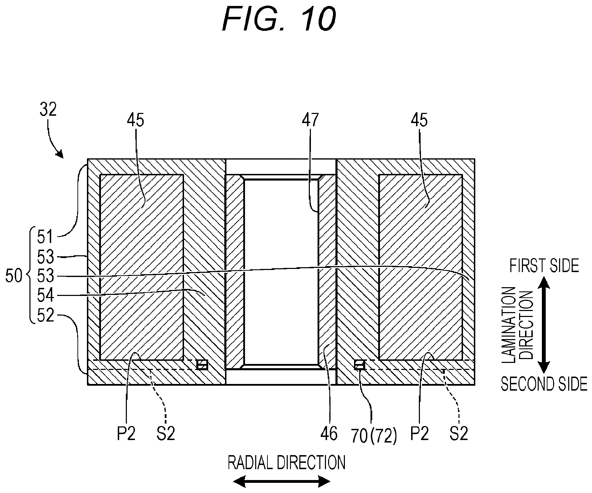

The first aspect to the third aspect are different in the position of the first ring-shaped core 70 provided to the plurality of divided cores 33. The first aspect includes two configurations of a first example (see Figs. 7 and 8) and a second example (see Figs. 9 and 10). The third aspect is an example where the first example of the first aspect and the second aspect are combined. In the third aspect, the first ring-shaped core 70 is provided at the position of each first ring-shaped core 70 provided in the first example of the first aspect and the second aspect. The fourth aspect to the sixth aspect are different in the position of the second ring-shaped core 75 provided to the plurality of divided cores 33. The sixth aspect is an example where the fourth aspect and the fifth aspect are combined. In the sixth aspect, the second ring-shaped core 75 is provided at the position of each second ring-shaped core 75 provided in the fourth aspect and the fifth aspect. In this modification, the first aspect is described first, and then the second aspect to the sixth aspect are sequentially described. In each of the descriptions of the second aspect to the sixth aspect, descriptions of points common to the first aspect to the fifth aspect that are already described are omitted as appropriate. In each of the descriptions of the first aspect to the sixth aspect, each component with the same name, to which the same reference sign is assigned, indicates a predetermined component in a description target aspect. This is also the same with a case where a description is given, distinguishing the first example and the second example in the first aspect.

### <First Aspect>

The coupled core 41 of the first example and the second example of the first aspect is described with reference to Figs. 7 to 10. The coupled core 41 of the first aspect includes the plurality of divided cores 33 and one first ring-shaped core 70 (see Figs. 7 and 9). In the coupled core 41, the first ring-shaped core 70 is provided on end surfaces of the plurality of divided cores 33 on one of the first side and the second side in the lamination direction, and is not provided on end surfaces of the plurality of divided cores 33 on the other of the first side and the second side in the lamination direction. The first ring-shaped core 70 is formed of the ring-shaped second electric steel sheet. The first ring-shaped core 70 may be formed by laminating a plurality of second electric steel sheets. In this modification, the first ring-shaped core 70 is formed by laminating two second electric steel sheets. The number of the second electric steel sheets forming the first ring-shaped core 70 is determined as appropriate, considering various conditions. In the coupled core 41, the first ring-shaped core 70 is in the following state. The previously-described state is a state where the second electric steel sheets, together with a plurality of first electric steel sheets, are laminated in the lamination direction in the plurality of divided cores 33.

The first ring-shaped core 70 includes a plurality of first core portions 71 and a first coupling portion 72 (see Figs. 7 and 9). The number of the first core portions 71 in the first ring-shaped core 70 is equal to the number of the divided cores 33. In other words, when the number of the divided cores 33 is 14, the first ring-shaped core 70 includes 14 first core portions 71. The plurality of first core portions 71 is arranged at positions same as those of the plurality of divided cores 33 in the circumferential direction and the radial direction. Each first core portion 71 has a shape corresponding to the shape of each divided core 33 when viewed in the lamination direction. Therefore, in the coupled core 41, the plurality of first core portions 71 is superposed in the lamination direction in alignment with the plurality of divided cores 33. The first coupling portion 72 is provided to an inner peripheral part of the first ring-shaped core 70. The first coupling portion 72 is integral at the inner peripheral part of the first ring-shaped core 70 with the plurality of first core portions 71, and couples the plurality of first core portions 71 in the circumferential direction.

The first example of the first aspect is described below with reference to Figs. 7 and 8. The second example of the first aspect is then described with reference to Figs. 9 and 10. In the description of the second example, a description of points common with the first example is omitted as appropriate. In the first example of the first aspect, the coupled core 41 includes the first ring-shaped core 70 on the end surfaces of the plurality of divided cores 33 on the first side in the lamination direction. In the second example of the first aspect, the coupled core 41 includes the first ring-shaped core 70 on the end surfaces of the plurality of divided cores 33 on the second side in the lamination direction.

### <First Example>

The coupled core 41 of the first example is formed by, for example, the following manufacturing method including a first step and a second step. In the first step, the plurality of first electric steel sheets equal in number to the number of the plurality of divided cores 33 is punched out from the electric steel sheet being the material. The plurality of first electric steel sheets may be simultaneously punched out from the electric steel sheet being the material. This applies at the time of manufacturing the divided cores 33 (see Fig. 4) in the above-described embodiment. In this modification, the plurality of first electric steel sheets is assumed to be simultaneously punched out from the electric steel sheet being the material. The plurality of first electric steel sheets simultaneously punched out is laminated in a state of being arranged at the following positions. The previously-described positions are positions that agree with the arrangement of the plurality of divided cores 33 in the rotating body 32. Simultaneous punching for the plurality of first electric steel sheets is repeated the number of times equal to the number of the first electric steel sheets in the divided core 33. Pluralities of the first electric steel sheets simultaneously punched out in the second and later punching are sequentially laminated on the plurality of first electric steel sheets punched out previously. In the first step, the pluralities of the first electric steel sheets simultaneously punched out form the plurality of divided cores 33. In the second step, a predetermined number of the second electric steel sheets are punched out from the electric steel sheet being the material. The second electric steel sheets are laminated on the plurality of first electric steel sheets simultaneously punched out last in the first step. In other words, the second electric steel sheets are punched out from the electric steel sheet being the material in the following state, and are laminated on the plurality of divided cores 33 formed in the first step. The previously-described state is a state where the plurality of divided cores 33 aligns with the plurality of first core portions 71 in the circumferential direction and the radial direction. In the second step, the second electric steel sheets form the first ring-shaped core 70 provided on the first side in the lamination direction.

In the coupled core 41, the fixing of the first electric steel sheet and the second electric steel sheet laminated in the lamination direction employs caulking. When the first ring-shaped core 70 is formed of the plurality of second electric steel sheets, the following second electric steel sheet is laminated on the second electric steel sheet punched out previously. The previously-described second electric steel sheet is the second electric steel sheet punched out by the second and later punching in punching for the second electric steel sheet repeated the number of times equal to the number of the second electric steel sheets. The fixing of the plurality of second electric steel sheets also employs caulking. Caulking used to form the coupled core 41 is performed as in the case of the plurality of first electric steel sheets illustrated in Fig. 5. Hence, a description related to the previously-described caulking is omitted. In the coupled core 41, the recesses 38 are formed in an end surface on the first side in the lamination direction on the first ring-shaped core 70 provided on the first side in the lamination direction.

In the rotating body 32 including the coupled core 41, the dimension H1 (see Fig. 7) of each divided core 33 may be set to be the same as the dimension H2 (see Fig. 4) of each permanent magnet 45, and the positions of the plurality of divided cores 33 in the lamination direction may be set to agree with the positions of the plurality of permanent magnets 45 in the lamination direction (see "arranged state" in Fig. 7). In this case, first spaces S1 equal in number to the number of the permanent magnets 45 are formed in the following plurality of parts on the first side in the lamination direction (see Figs. 7 and 8). The previously-described plurality of parts is a plurality of parts each disposed between two first core portions 71 adjacent to each other in the circumferential direction in the plurality of first core portions 71 and on the first side in the lamination direction with respect to the end surfaces of the permanent magnets 45 on the first side in the lamination direction. In Fig. 8, areas of broken lines illustrated on the first side in the lamination direction correspond to the first spaces S1.

The resin material forming the first part 51 fills the plurality of first spaces S1. Consequently, first protruding portions P1 equal in number to the number of the plurality of permanent magnets 45 are formed on the first part 51. Each first protruding portion P1 protrudes toward the second side in the lamination direction, and is fitted in the corresponding first space S1 (see Fig. 8). In the rotating body 32, the linkage of the coupled core 41 and the covering portion 50 is improved. The stiffness of the rotating body 32 is increased. No permanent magnet 45 is provided in each first space S1. The occurrence of leakage magnetic flux via the first coupling portion 72 can be prevented. However, the dimension H2 of each permanent magnet 45 may be set to be the same as a dimension H3. The dimension H3 is the dimension of the coupled core 41 in the lamination direction (see Fig. 7). In this case, no first space S1 is formed. No first protruding portion P1 is formed on the first part 51.

In the first example, the first ring-shaped core 70 is not provided on the end surfaces of the plurality of divided cores 33 on the second side in the lamination direction. Therefore, a space corresponding to a second space S2 is not formed on the second side in the lamination direction in the rotating body 32. As a result, a protruding portion corresponding to a second protruding portion P2 is not formed on the second part 52 in the rotating body 32. The second part 52 has a shape as in the above description (see Figs. 6 and 8). The second space S2 and the second protruding portion P2 are described in the second example.

### <Second Example>

The coupled core 41 of the second example is formed by, for example, the following manufacturing method including a first step and a second step. In the first step, a predetermined number of the second electric steel sheets are punched out from the electric steel sheet being the material. In the first step, the second electric steel sheets form the first ring-shaped core 70 provided on the second side in the lamination direction. In the second step, the plurality of first electric steel sheets equal in number to the number of the plurality of divided cores 33 is simultaneously punched out from the electric steel sheet being the material. The plurality of first electric steel sheets is simultaneously punched out in a state of being arranged at positions that agree with the arrangement of the plurality of divided cores 33 in the rotating body 32, and is laminated on the second electric steel sheet punched out last in the first step. In other words, the plurality of first electric steel sheets simultaneously punched out is laminated on the plurality of first core portions 71 of the first ring-shaped core 70 formed in the first step, respectively. In the second step, pluralities of the first electric steel sheets simultaneously punched out form the plurality of divided cores 33. In the coupled core 41, the recesses 40 are formed in an end surface on the second side in the lamination direction on the first ring-shaped core 70 provided on the second side in the lamination direction.

In the rotating body 32 including the coupled core 41, the dimension H1 (see Fig. 9) of the divided core 33 may be set to be the same as the dimension H2 (see Fig. 4) of the permanent magnet 45, and the positions of the plurality of divided cores 33 in the lamination direction may be set to agree with the positions of the plurality of permanent magnets 45 in the lamination direction (see "arranged state" in Fig. 9). In this case, the second spaces S2 equal in number to the number of the permanent magnets 45 are formed in the following plurality of parts on the second side in the lamination direction (see Fig. 10). The previously-described plurality of parts is a plurality of parts each disposed between two first core portions 71 adjacent to each other in the circumferential direction in the plurality of first core portions 71 and on the second side in the lamination direction with respect to the end surface of the permanent magnet 45 on the second side in the lamination direction. In Fig. 10, areas of broken lines illustrated on the second side in the lamination direction correspond to the second spaces S2.

The resin material forming the second part 52 fills the plurality of second spaces S2. Consequently, the second protruding portions P2 equal in number to the number of the plurality of permanent magnets 45 are formed on the second part 52. Each second protruding portion P2 protrudes toward the first side in the lamination direction, and is fitted in the second space S2 (see Fig. 10). In the rotating body 32, the linkage of the coupled core 41 and the covering portion 50 is improved. The stiffness of the rotating body 32 is increased. No permanent magnet 45 is provided in the second space S2. The occurrence of leakage magnetic flux via the first coupling portion 72 can be prevented. However, the dimension H2 of each permanent magnet 45 may be set to be the same as the dimension H3. The dimension H3 is the dimension of the coupled core 41 in the lamination direction (see Fig. 9). In this case, no second space S2 is formed. No second protruding portion P2 is formed on the second part 52.

In the second example, the first ring-shaped core 70 is not provided on the end surfaces of the plurality of divided cores 33 on the first side in the lamination direction. Therefore, a space corresponding to each first space S1 is not formed on the first side in the lamination direction in the rotating body 32. As a result, a protruding portion corresponding to each first protruding portion P1 is not formed on the first part 51 in the rotating body 32. The first part 51 has a shape as in the above description (see Figs. 6 and 10).

### <Second Aspect>

The coupled core 41 of the second aspect is described with reference to Fig. 11. The coupled core 41 includes the plurality of divided cores 33 and one first ring-shaped core 70. The first ring-shaped core 70 is provided at the following position in the lamination direction in the plurality of divided cores 33 in the coupled core 41. The previously-described position is a position between the end surface of each of the plurality of divided cores 33 on the first side in the lamination direction and the end surface of each of the plurality of divided cores 33 on the second side in the lamination direction. Furthermore, the previously-described position is a position identical in the lamination direction among the plurality of divided cores 33. Each divided core 33 is divided by the first ring-shaped core 70 into two parts in the lamination direction. In this modification, of the two divided parts of the divided core 33, the part provided on the first side in the lamination direction is referred to as a "first piece 34," and the part provided on the second side in the lamination direction is referred to as a "second piece 35." The first piece 34 and the second piece 35 of each of the plurality of divided cores 33 sandwich the first ring-shaped core 70 from both sides in the lamination direction. Consequently, the first ring-shaped core 70 is in the following first state and second state. The first state is a state where the second electric steel sheets, together with the plurality of first electric steel sheets, are laminated in the lamination direction in the plurality of divided cores 33. The second state is a state where the second electric steel sheets are sandwiched between predetermined two of the plurality of first electric steel sheets in the plurality of divided cores 33. The previously-described two first electric steel sheets are the first electric steel sheet forming an end surface of the first piece 34 on the second side in the lamination direction, and the first electric steel sheet forming an end surface of the second piece 35 on the first side in the lamination direction. In the coupled core 41, the plurality of first core portions 71 is superposed in the lamination direction in alignment with the plurality of divided cores 33 as in the coupled core 41 of the first aspect. In this modification, the first piece 34 and the second piece 35 have the same shape, the dimensions of which in the lamination direction are equal to each other. However, the position in the lamination direction, which divides each divided core 33 into two parts, is determined as appropriate, considering various conditions.

The coupled core 41 is formed by, for example, the following manufacturing method including a first step to a third step. In the first step, the plurality of first electric steel sheets equal in number to the number of the plurality of divided cores 33 is simultaneously punched out from the electric steel sheet being the material. The plurality of first electric steel sheets simultaneously punched out is laminated in a state of being arranged at the following positions. The previously-described positions are positions that agree with the arrangement of the plurality of divided cores 33 in the rotating body 32. Simultaneous punching for the plurality of first electric steel sheets is repeated the number of times equal to the number of the first electric steel sheets in the second piece 35. In the first step, pluralities of the first electric steel sheets simultaneously punched out form the plurality of second pieces 35. In the second step, a predetermined number of the second electric steel sheets is punched out from the electric steel sheet being the material. The second electric steel sheets are laminated on the plurality of first electric steel sheets simultaneously punched out last in the first step. In other words, the second electric steel sheets are punched out from the electric steel sheet being the material in the following state, and are laminated on the plurality of second pieces 35 formed in the first step. The previously-described state is a state where the plurality of divided cores 33 (the plurality of second pieces 35) align with the plurality of first core portions 71 in the circumferential direction and the radial direction. In the second step, the second electric steel sheets form the first ring-shaped core 70 provided between each first piece 34 and each second piece 35. In the third step, the plurality of first electric steel sheets is simultaneously punched out again from the electric steel sheet being the material. The plurality of first electric steel sheets is simultaneously punched out in a state of being arranged at positions same as those in the case of the first step, and is laminated on the second electric steel sheet punched out last in the second step. In other words, the plurality of first electric steel sheets simultaneously punched out is laminated on the plurality of first core portions 71 of the first ring-shaped core 70 formed in the second step, respectively. Simultaneous punching for the plurality of first electric steel sheets is repeated the number of times equal to the number of the first electric steel sheets in the first piece 34. In the third step, pluralities of the first electric steel sheets simultaneously punched out form the plurality of first pieces 34.

In the coupled core 41, the recesses 38 are formed in end surfaces on the first side in the lamination direction on the plurality of first pieces 34 provided on the first side in the lamination direction. In the coupled core 41, the recesses 40 are formed in end surfaces on the second side in the lamination direction on the plurality of second pieces 35 provided on the second side in the lamination direction. In the rotating body 32 including the coupled core 41, a dimension H4 may be set to be the same as the dimension H2 (see Fig. 4) of the permanent magnet 45. The dimension H4 is the dimension of the coupled core 41 in the lamination direction (see Fig. 11).

### <Third Aspect>

The coupled core 41 of the third aspect is described with reference to Fig. 12. The coupled core 41 includes the plurality of divided cores 33 and two first ring-shaped cores 70. Each divided core 33 is divided into the first piece 34 and the second piece 35. In the coupled core 41, the two first ring-shaped cores 70 are provided at the same positions as the respective coupled cores 41 of the first example of the first aspect and the second aspect as described above. The coupled core 41 is formed by, for example, a manufacturing method including four steps. In this manufacturing method, steps corresponding to the first step to the third step of the second aspect are sequentially conducted first. Lastly, a step corresponding to the second step of the first example of the first aspect is conducted. In the step corresponding to the second step of the first example of the first aspect, second electric steel sheets are laminated on the plurality of first electric steel sheets simultaneously punched out last in the step corresponding to the third step of the second aspect. In other words, the second electric steel sheets are punched out from the electric steel sheet being the material in the following state, and are laminated on the plurality of first pieces 34 formed in the step corresponding to the third step of the second aspect. The previously-described state is a state where the plurality of divided cores 33 (the plurality of first pieces 34) align with the plurality of first core portions 71 in the circumferential direction and the radial direction. In the step corresponding to the first step of the second aspect, pluralities of the first electric steel sheets simultaneously punched out form the plurality of second pieces 35. In the step corresponding to the second step of the second aspect, the second electric steel sheets form the first ring-shaped core 70 provided between the first pieces 34 and the second pieces 35. In the step corresponding to the third step of the second aspect, pluralities of the first electric steel sheets simultaneously punched out form the plurality of first pieces 34. In the step corresponding to the second step of the first example of the first aspect, the second electric steel sheets form the first ring-shaped core 70 provided on the first side in the lamination direction.

In the rotating body 32 including the coupled core 41, the following dimension may be set to be the same as the dimension H2 (see Fig. 4) of each permanent magnet 45, and the positions of the plurality of divided cores 33 in the lamination direction in the following state may be set to agree with the positions of the plurality of permanent magnets 45 in the lamination direction. The previously-described dimension is the dimension (which agrees with the "dimension H4" in Fig. 11) of the divided core 33 in the lamination direction in a state of sandwiching the first ring-shaped core 70. The previously-described state is a state same as that of the coupled core 41 (see Fig. 11) of the second aspect where the first ring-shaped core 70 is sandwiched. According to the rotating body 32 thus configured, the linkage of the coupled core 41 and the covering portion 50 is improved and the stiffness of the rotating body 32 is increased as in the case of the rotating body 32 (see Figs. 7 and 8) including the coupled core 41 of the first example of the first aspect. Furthermore, the occurrence of leakage magnetic flux via the first coupling portion 72 provided on the first side in the lamination direction is prevented. However, the dimension H2 of each permanent magnet 45 may be set to be the same as a dimension H5. The dimension H5 is the dimension of the coupled core 41 in the lamination direction (see Fig. 12).

Unlike Fig. 12, the first ring-shaped core 70 may be provided on the end surfaces of the plurality of divided cores 33 on the second side in the lamination direction as in the second example of the first aspect. However, in this modification, an illustration related to the following coupled core is omitted. The previously-described coupled core is a coupled core where two first ring-shaped cores 70 are provided at positions same as those of the coupled cores 41 in the second example of the first aspect and the second aspect. In a manufacturing method of this coupled core, the following four steps are conducted. In other words, a step corresponding to the first step of the second example of the first aspect is conducted first. Steps corresponding to the first step to third step of the second aspect are then sequentially conducted. In the step corresponding to the first step of the second aspect, the plurality of first electric steel sheets is simultaneously punched out in a state of being arranged at positions that agree with the arrangement of the plurality of divided cores 33 in the rotating body 32, and is laminated on the second electric steel sheet punched out last in the step corresponding to the first step of the second example of the first aspect. In other words, the plurality of first electric steel sheets simultaneously punched out is laminated on the plurality of first core portions 71 of the first ring-shaped core 70 formed in the step corresponding to the first step of the second example of the first aspect, respectively. In the step corresponding to the first step of the second example of the first aspect, the second electric steel sheets form the first ring-shaped core 70 provided on the second side in the lamination direction. In the step corresponding to the first step of the second aspect, pluralities of the first electric steel sheets simultaneously punched out form the plurality of second pieces 35. In the step corresponding to the second step of the second aspect, the second electric steel sheets form the first ring-shaped core 70 provided between the first pieces 34 and the second pieces 35. In the step corresponding to the third step of the second aspect, pluralities of the first electric steel sheets simultaneously punched out forms the plurality of first pieces 34. In a rotating body including this coupled core, the arrangement of the plurality of permanent magnets 45 in the coupled core may be set to be similar to that in the case of the coupled core 41 (see Fig. 12) of the above-described third aspect. According to such the rotating body, the linkage of the coupled core and a covering portion is improved and the stiffness of the rotating body is increased as in the case of the rotating body 32 (see Figs. 9 and 10) including the coupled core 41 of the second example of the first aspect. Furthermore, the occurrence of leakage magnetic flux via the first coupling portion 72 provided on the second side in the lamination direction can be prevented. However, the dimension H2 of each permanent magnet 45 may be set to be the same as the dimension of the coupled core in the lamination direction.

### <Fourth Aspect>

The coupled core 41 of the fourth aspect is described with reference to Figs. 13 and 14. The coupled core 41 includes the plurality of divided cores 33 and two second ring-shaped cores 75. In the coupled core 41, the second ring-shaped cores 75 are provided on the end surfaces of the plurality of divided cores 33 on the first side in the lamination direction, and on the end surfaces of the plurality of divided cores 33 on the second side in the lamination direction. In other words, the plurality of divided cores 33 is sandwiched between the two second ring-shaped cores 75 from both sides in the lamination direction. The second ring-shaped core 75 is formed of a ring-shaped third electric steel sheet. The second ring-shaped core 75 may be formed by laminating a plurality of third electric steel sheets. In this modification, the second ring-shaped core 75 is formed by laminating two third electric steel sheets. The number of the third electric steel sheets forming the second ring-shaped core 75 is determined as appropriate, considering various conditions. In the coupled core 41, the second ring-shaped core 75 is in the following state. The previously-described state is a state where the third electric steel sheets, together with the plurality of first electric steel sheets, are laminated in the lamination direction in the plurality of divided cores 33.

The second ring-shaped core 75 includes a plurality of second core portions 76 and a second coupling portion 77 (see Fig. 13). The number of the second core portions 76 in the second ring-shaped core 75 is equal to the number of the divided cores 33. In other words, when the number of the divided cores 33 is 14, the second ring-shaped core 75 includes 14 second core portions 76. The plurality of second core portions 76 is arranged at positions same as those of the plurality of divided cores 33 in the circumferential direction and the radial direction. Each second core portion 76 has a shape corresponding to the shape of each divided core 33 when viewed in the lamination direction. Therefore, in the coupled core 41, the plurality of second core portions 76 is superposed in the lamination direction in alignment with the plurality of divided cores 33. The second coupling portion 77 is provided to an outer peripheral part of the second ring-shaped core 75. The previously-described outer peripheral part corresponds to a part in the circumferential direction between the following two projection portions 36. The previously-described two projection portions 36 are two projection portions 36, which face each other in the circumferential direction, of two divided cores 33 adjacent to each other in the circumferential direction. In other words, the second coupling portion 77 is formed of a plurality of parts provided at equiangular intervals in the circumferential direction to the outer peripheral part of the second ring-shaped core 75. The second coupling portion 77 is integral at the outer peripheral part of the second ring-shaped core 75 with the plurality of second core portions 76, and couples the plurality of second core portions 76 in the circumferential direction.

The coupled core 41 is formed by, for example, the following manufacturing method including a first step to a third step. In the first step, a predetermined number of the third electric steel sheets are punched out from the electric steel sheet being the material. In the first step, the third electric steel sheets form the second ring-shaped core 75 provided on the second side in the lamination direction. The second step is conducted similarly to the second step of the second example of the first aspect. However, in the second step, the plurality of first electric steel sheets is simultaneously punched out in a state of being arranged at positions that agree with the arrangement of the plurality of divided cores 33 in the rotating body 32, and is laminated on the third electric steel sheet punched out last in the first step. In other words, the plurality of first electric steel sheets simultaneously punched out is laminated on the plurality of second core portions 76 of the second ring-shaped core 75 formed in the first step, respectively. In the second step, pluralities of the first electric steel sheets simultaneously punched out form the plurality of divided cores 33. In the third step, a predetermined number of the third electric steel sheets are punched out again from the electric steel sheet being the material. In the third step, the third electric steel sheets are laminated on the plurality of first electric steel sheets simultaneously punched out last in the second step. In other words, the third electric steel sheets are punched out from the electric steel sheet being the material in the following state, and are laminated on the plurality of divided cores 33 formed in the second step. The previously-described state is a state where the plurality of divided cores 33 align with the plurality of second core portions 76 in the circumferential direction and the radial direction. In the third step, the third electric steel sheets form the second ring-shaped core 75 provided on the first side in the lamination direction.

In the coupled core 41, the fixing of the first electric steel sheet and the third electric steel sheet laminated in the lamination direction employs caulking. When the second ring-shaped core 75 is formed of the plurality of third electric steel sheets, the following third electric steel sheet is laminated on the third electric steel sheet punched out previously. The previously-described third electric steel sheet is the third electric steel sheet punched out by the second and later punching in punching for the third electric steel sheet repeated the number of times equal to the number of the third electric steel sheets. The fixing of the plurality of third electric steel sheets also employs caulking. Caulking used to form the coupled core 41 is performed as in the case of the plurality of first electric steel sheets illustrated in Fig. 5. Hence, a description related to the previously-described caulking is omitted. In the coupled core 41, the recesses 38 are formed in an end surface on the first side in the lamination direction on the second ring-shaped core 75 provided on the first side in the lamination direction. In the coupled core 41, the recesses 40 are formed in an end surface on the second side in the lamination direction on the second ring-shaped core 75 provided on the second side in the lamination direction.

In the rotating body 32 including the coupled core 41, the dimension H1 (see Fig. 13) of each divided core 33 may be set to be the same as the dimension H2 (see Fig. 4) of the permanent magnet 45, and the positions of the plurality of divided cores 33 in the lamination direction may be set to agree with the positions of the plurality of permanent magnets 45 in the lamination direction (see "arranged state" in Fig. 13). In this case, third spaces S3 equal in number to the number of the permanent magnets 45 are formed in the following plurality of parts on the first side in the lamination direction (see Figs. 13 and 14). The previously-described plurality of parts is a plurality of parts each disposed between two second core portions 76 adjacent to each other in the circumferential direction in the plurality of second core portions 76 and on the first side in the lamination direction with respect to the end surfaces of the permanent magnets 45 on the first side in the lamination direction. Fourth spaces S4 equal in number to the number of the permanent magnets 45 are formed in the following plurality of parts on the second side in the lamination direction (see Fig. 14). The previously-described plurality of parts is a plurality of parts each disposed between two second core portions 76 adjacent to each other in the circumferential direction in the plurality of second core portions 76 and on the second side in the lamination direction with respect to the end surfaces of the permanent magnets 45 on the second side in the lamination direction. The third spaces S3 and the fourth spaces S4 have the same shape. In Fig. 14, areas of broken lines illustrated on the first side in the lamination direction correspond to the third spaces S3, and areas of broken lines illustrated on the second side in the lamination direction correspond to the fourth spaces S4.

The resin material forming the first part 51 fills the plurality of third spaces S3. The resin material forming the second part 52 fills the plurality of fourth spaces S4. Consequently, third protruding portions P3 equal in number to the number of the plurality of permanent magnets 45 are formed on the first part 51, and fourth protruding portions P4 equal in number to the number of the plurality of permanent magnets 45 are formed on the second part 52. Each third protruding portion P3 protrudes toward the second side in the lamination direction, and is fitted in the third space S3 (see Fig. 14). Each fourth protruding portion P4 protrudes toward the first side in the lamination direction, and is fitted in the fourth space S4 (see Fig. 14). The third protruding portion P3 and the fourth protruding portion P4 have the same shape. In the rotating body 32, the linkage of the coupled core 41 and the covering portion 50 is improved. The stiffness of the rotating body 32 is increased. No permanent magnet 45 is provided in the third space S3 and the fourth space S4. The occurrence of leakage magnetic flux via the second coupling portion 77 can be prevented. However, the dimension H2 of each permanent magnet 45 may be set to be the same as a dimension H6. The dimension H6 is the dimension of the coupled core 41 in the lamination direction (see Fig. 13). In this case, the third space S3 and the fourth space S4 are not formed. The third protruding portion P3 is not formed on the first part 51. The fourth protruding portion P4 is not formed on the second part 52.

At the time of resin molding the covering portion 50, the resin material passes through gaps G. Each gap G is a gap formed between the corresponding permanent magnet 45 and each of the second coupling portions 77 of the second ring-shaped cores 75 on the first side and the second side in the lamination direction (see Fig. 14). Consequently, each third part 53 is integral at an end portion on the first side in the lamination direction with the first part 51, and is integral at an end portion on the second side in the lamination direction with the second part 52 (see Fig. 14). The dimension of the second coupling portion 77 in the radial direction may be made smaller than the dimension of the projection portion 36 of each divided core 33 in the radial direction. In addition, a part of the second coupling portion 77 on the outer peripheral side or the inner peripheral side in the radial direction may be provided with a cutout. According to each of the previously-described configurations, the resin material is allowed to smoothly pass through the gap G. In the coupled core 41 of the above-described fourth aspect, one of the two second ring-shaped cores 75 may be omitted. In other words, in the coupled core, the second ring-shaped core 75 may be provided on the end surfaces of the plurality of divided cores 33 on one of the first side and the second side in the lamination direction, and may not be provided on the end surfaces of the plurality of divided cores 33 on the other of the first side and the second side in the lamination direction.

### <Fifth Aspect>

The coupled core 41 of the fifth aspect is described with reference to Fig. 15. The coupled core 41 includes the plurality of divided cores 33 and one second ring-shaped core 75. In the coupled core 41, the second ring-shaped core 75 is provided at the following position in the lamination direction in the plurality of divided cores 33. The previously-described position is a position between the end surface of each of the plurality of divided cores 33 on the first side in the lamination direction and the end surface of each of the plurality of divided cores 33 on the second side in the lamination direction. Furthermore, the previously-described position is a position identical in the lamination direction among the plurality of divided cores 33. Each divided core 33 is divided into the first piece 34 and the second piece 35. The first piece 34 and the second piece 35 of each of the plurality of divided cores 33 sandwich the second ring-shaped core 75 from both sides in the lamination direction. Consequently, the second ring-shaped core 75 is in the following third state and fourth state. The third state is a state where the third electric steel sheets, together with the plurality of first electric steel sheets, are laminated in the lamination direction in the plurality of divided cores 33. The fourth state is a state where the third electric steel sheets are sandwiched between predetermined two of the plurality of first electric steel sheets in the plurality of divided cores 33. The previously-described two first electric steel sheets are the first electric steel sheet forming the end surface of the first piece 34 on the second side in the lamination direction, and the first electric steel sheet forming the end surface of the second piece 35 on the first side in the lamination direction. In the coupled core 41, the plurality of second core portions 76 is superposed in the lamination direction in alignment with the plurality of divided cores 33 as in the coupled core 41 of the fourth aspect.

The coupled core 41 is formed by, for example, the following manufacturing method including a first step to a third step. The first step is conducted similarly to the first step of the second aspect. In the first step, pluralities of the first electric steel sheets simultaneously punched out form the plurality of second pieces 35. In the second step, a predetermined number of the third electric steel sheets are punched out from the electric steel sheet being the material. The third electric steel sheets are laminated on the plurality of first electric steel sheets simultaneously punched out last in the first step. In other words, the third electric steel sheets are punched out from the electric steel sheet being the material in the following state, and are laminated on the plurality of second pieces 35 formed in the first step. The previously-described state is a state where the plurality of divided cores 33 (the plurality of second pieces 35) align with the plurality of second core portions 76 in the circumferential direction and the radial direction. In the second step, the third electric steel sheets form the second ring-shaped core 75 provided between the first pieces 34 and the second pieces 35. The third step is conducted similarly to the third step of the second aspect. However, in the third step, the plurality of first electric steel sheets is simultaneously punched out in a state of being arranged at positions same as those in the case of the first step, and is laminated on the third electric steel sheet punched out last in the second step. In other words, the plurality of first electric steel sheets simultaneously punched out is laminated on the plurality of second core portions 76 of the second ring-shaped core 75 formed in the second step, respectively. In the third step, pluralities of the first electric steel sheets simultaneously punched out form the plurality of first pieces 34.

In the rotating body 32 including the coupled core 41, a dimension H7 may be set to be the same as the dimension H2 (see Fig. 4) of each permanent magnet 45. The dimension H7 is the dimension of the coupled core 41 in the lamination direction (see Fig. 15). At the time of resin molding the covering portion 50, the resin material forming the third parts 53 passes through the following gaps. Each previously-described gap is a gap formed between the corresponding permanent magnet 45 and the second coupling portion 77 of the second ring-shaped core 75. In this modification, illustrations of the previously-described gaps are omitted. Consequently, each third part 53 has a shape continuous in the lamination direction. In order to allow the resin material to smoothly pass through the previously-described gaps, the dimension of the second coupling portion 77 in the radial direction may be smaller than the dimension of the projection portion 36 of the divided core 33 in the radial direction. In addition, a part of the second coupling portion 77 on the outer peripheral side or the inner peripheral side in the radial direction may be provided with a cutout.

### <Sixth Aspect>

The coupled core 41 of the sixth aspect is described with reference to Fig. 16. The coupled core 41 includes the plurality of divided cores 33 and three second ring-shaped cores 75. Each divided core 33 is divided into the first piece 34 and the second piece 35. In the coupled core 41, the three second ring-shaped cores 75 are provided at positions same as those of the coupled cores 41 of the fourth aspect and the fifth aspect as described above. The coupled core 41 is formed by, for example, a manufacturing method including five steps. In this manufacturing method, a step corresponding to the first step of the fourth aspect is conducted first. Next, the steps corresponding to the first step to the third step of the fifth aspect are sequentially conducted. In the step corresponding to the first step of the fifth aspect, the plurality of first electric steel sheets is simultaneously punched out in a state of being arranged at positions that agree with the arrangement of the plurality of divided cores 33 in the rotating body 32, and is laminated on the third electric steel sheet punched out last in the step corresponding to the first step of the fourth aspect. In other words, the plurality of first electric steel sheets simultaneously punched out is laminated on the plurality of second core portions 76 of the second ring-shaped core 75 formed in the step corresponding to the first step of the fourth aspect, respectively. Lastly, the step corresponding to the third step of the fourth aspect is conducted. In the step corresponding to the third step of the fourth aspect, the third electric steel sheets are laminated on the plurality of first electric steel sheets simultaneously punched out last in the step corresponding to the third step of the fifth aspect. In other words, the third electric steel sheets are punched out from the electric steel sheet being the material in the following state, and are laminated on the plurality of first pieces 34 formed in the step corresponding to the third step of the fifth aspect. The previously-described state is a state where the plurality of divided cores 33 (the plurality of first pieces 34) align with the plurality of second core portions 76 in the circumferential direction and the radial direction.

In the step corresponding to the first step of the fourth aspect, the third electric steel sheets form the second ring-shaped core 75 provided on the second side in the lamination direction. In the step corresponding to the first step of the fifth aspect, pluralities of the first electric steel sheets simultaneously punched out form the plurality of second pieces 35. In the step corresponding to the second step of the fifth aspect, the third electric steel sheets form the second ring-shaped core 75 provided between the first pieces 34 and the second pieces 35. In the step corresponding to the third step of the fifth aspect, pluralities of the first electric steel sheets simultaneously punched out form the plurality of first pieces 34. In the step corresponding to the third step of the fourth aspect, the third electric steel sheets form the second ring-shaped core 75 provided on the first side in the lamination direction.

In the rotating body 32 including the coupled core 41, the following dimension may be set to be the same as the dimension H2 (see Fig. 4) of each permanent magnet 45, and the positions of the plurality of divided cores 33 in the lamination direction in the following state may be set to agree with the positions of the plurality of permanent magnets 45 in the lamination direction. The previously-described dimension is the dimension (which agrees with the "dimension H7" in Fig. 15) of each divided core 33 in the lamination direction in a state of sandwiching the second ring-shaped core 75. The previously-described state is a same state same as that of the coupled core 41 (see Fig. 15) of the fifth aspect sandwiching the second ring-shaped core 75. According to such a rotating body 32, the linkage of the coupled core 41 and the covering portion 50 is improved and the stiffness of the rotating body 32 is increased as in the case of the rotating body 32 (see Figs. 13 and 14) including the coupled core 41 of the fourth aspect. Furthermore, the occurrence of leakage magnetic flux via the second coupling portions 77 provided on the first side and the second side in the lamination direction can be prevented. However, the dimension H2 of each permanent magnet 45 may be set to be the same as a dimension H8. The dimension H8 is the dimension of the coupled core 41 in the lamination direction (see Fig. 16). In the coupled core 41 of the above-described sixth aspect, one of the two second ring-shaped cores 75 provide on the first side and the second side in the lamination direction may be omitted. In other words, in the coupled core, the second ring-shaped cores 75 may be provide on the end surfaces of the plurality of divided cores 33 on the first side or second side in the lamination direction, and between the first pieces 34 and the second pieces 35.

(4) In the covering portion 50, the first part 51 covers the end surfaces of the plurality of permanent magnets 45 on the first side in the lamination direction, and the end surfaces of the plurality of divided cores 33 on the first side in the lamination direction, and the second part 52 covers the end surfaces of the plurality of permanent magnets 45 on the second side in the lamination direction, and the end surfaces of the plurality of divided cores 33 on the second side in the lamination direction (see Figs. 4 and 6). The area covered by the first part of the covering portion on the first side in the lamination direction may be the end surfaces of the plurality of permanent magnets 45 on the first side in the lamination direction, and at least a part of the end surfaces of the plurality of divided cores 33 on the first side in the lamination direction may be exposed. The area covered by the second part of the covering portion on the second side in the lamination direction may be the end surfaces of the plurality of permanent magnets 45 on the second side in the lamination direction, and at least a part of the end surfaces of the plurality of divided cores 33 on the second side in the lamination direction may be exposed. The covering portion including such first part and second part may be employed, for example, in a case where the plurality of divided cores 33 is coupled by the first ring-shaped core 70 or the second ring-shaped core 75 (see Figs. 7 to 16).

### DESCRIPTION OF REFERENCE SIGNS

10: Motor, 20: Stator, 21: Stator core
22: Yoke, 23: Tooth, 24: Coil
25: Insulator, 26: Connector, 27: Terminal
28: Mold portion, 30: Rotor, 31: Shaft, 32: Rotating body
33: Divided core, 34: First piece, 35: Second piece, 36: Projection portion
37: Protrusion, 38: Recess, 39: Hole portion, 40: Recess
41: Coupled core, 45: Permanent magnet, 46: Support portion, 47: Through-hole
50: Covering portion, 51: First part, 52: Second part, 53: Third part
54: Fourth part, 55, 56, 57, 58: Through-hole
60, 61: Bearing, 62, 63: Bracket, 70: First ring-shaped core
71: First core portion, 72: First coupling portion, 75: Second ring-shaped core
76: Second core portion, 77: Second coupling portion, C: Center, G: Gap
H1, H2, H3, H4, H5, H6, H7, H8: Dimension
P1: First protruding portion, P2: Second protruding portion, P3: Third protruding portion
P4: Fourth protruding portion, S1: First space, S2: Second space
S3: Third space, S4: Fourth space

## Claims

1. A rotor of a rotary machine, the rotor comprising:
a shaft being a rotation axis of the rotor; and
a rotating body provided with the shaft, wherein
the rotating body includes:
a plurality of divided cores formed by laminating a plurality of first electric steel sheets, the plurality of divided cores being arranged in a circumferential direction, corresponding to a rotation direction of the rotor, with respect to a center of the shaft;
a plurality of permanent magnets equal in number to the number of the plurality of divided cores, the plurality of permanent magnets being arranged in the circumferential direction, alternating with the plurality of divided cores; and
a covering portion made of resin, the covering portion covering the plurality of permanent magnets,
the plurality of permanent magnets is in surface contact with side surfaces of the divided cores in the circumferential direction in a state where facing magnetic pole faces of two permanent magnets arranged on both sides of each divided core in the circumferential direction are homopolar,
the covering portion includes:
a ring-shaped first part covering end surfaces of the plurality of permanent magnets on a first side in a lamination direction in which the plurality of first electric steel sheets is laminated;
a ring-shaped second part covering end surfaces of the plurality of permanent magnets on a second side opposite to the first side in the lamination direction;
a plurality of third parts that are equal in number to the number of the plurality of permanent magnets, correspond to the plurality of respective permanent magnets, are each provided between two divided cores adjacent to each other in the circumferential direction, and cover outer peripheral surfaces of the plurality of permanent magnets on an outer peripheral side in a radial direction with respect to the center of the shaft; and
a cylindrical fourth part covering inner peripheral surfaces of the plurality of divided cores on an inner peripheral side in the radial direction, and inner peripheral surfaces of the plurality of permanent magnets on the inner peripheral side in the radial direction,
in the covering portion, the first part, the second part, the plurality of third parts, and the fourth part are integrated with one another, and
in the plurality of divided cores, outer peripheral surfaces of the divided cores on the outer peripheral side in the radial direction are exposed without being covered by the covering portion.

2. The rotor according to claim 1, wherein
the rotating body includes a support portion provided on the inner peripheral side of the fourth part in the radial direction, the support portion supporting the shaft.

3. The rotor according to claim 1 or 2, wherein
the rotating body includes a first ring-shaped core formed of a ring-shaped second electric steel sheet, the first ring-shaped core being in a state where the second electric steel sheet, together with the plurality of first electric steel sheets, is laminated in the lamination direction in the plurality of divided cores,
the first ring-shaped core includes:
a plurality of first core portions equal in number to the number of the plurality of divided cores, the plurality of first core portions being arranged at positions same as the positions of the plurality of divided cores in the circumferential direction and the radial direction; and
a first coupling portion integral with the plurality of first core portions, the first coupling portion coupling the plurality of first core portions in the circumferential direction,
the first coupling portion is provided on an inner peripheral part of the first ring-shaped core, and
the first ring-shaped core is provided on end surfaces of the plurality of divided cores on one of the first side and the second side in the lamination direction, and is not provided on end surfaces of the plurality of divided cores on the other of the first side and the second side in the lamination direction.

4. The rotor according to claim 3, wherein
the first ring-shaped core
is provided at a position between the end surface of each of the plurality of divided cores on the first side in the lamination direction and the end surface of each of the plurality of divided cores on the second side in the lamination direction, the position being identical in the lamination direction among the plurality of divided cores, and
is in a state where the second electric steel sheet is sandwiched between predetermined two of the plurality of first electric steel sheets in the plurality of divided cores.

5. The rotor according to claim 1 or 2, wherein
the rotating body includes a first ring-shaped core formed of a ring-shaped second electric steel sheet, the first ring-shaped core being in a state where the second electric steel sheet, together with the plurality of first electric steel sheets, is laminated in the lamination direction in the plurality of divided cores,
the first ring-shaped core includes:
a plurality of first core portions equal in number to the number of the plurality of divided cores, the plurality of first core portions being arranged at positions same as the positions of the plurality of divided cores in the circumferential direction and the radial direction; and
a first coupling portion integral with the plurality of first core portions, the first coupling portion coupling the plurality of first core portions in the circumferential direction,
the first coupling portion is provided on an inner peripheral part of the first ring-shaped core, and
the first ring-shaped core
is provided at a position between an end surface of each of the plurality of divided cores on the first side in the lamination direction and an end surface of each of the plurality of divided cores on the second side in the lamination direction, the position being identical in the lamination direction among the plurality of divided cores, and
is in a state where the second electric steel sheet is sandwiched between predetermined two of the plurality of first electric steel sheets in the plurality of divided cores.

6. The rotor according to claim 1 or 2, wherein
the rotating body includes a second ring-shaped core formed of a ring-shaped third electric steel sheet, the second ring-shaped core being in a state where the third electric steel sheet, together with the plurality of first electric steel sheets, is laminated in the lamination direction in the plurality of divided cores,
the second ring-shaped core includes:
a plurality of second core portions equal in number to the number of the plurality of divided cores, the plurality of second core portions being arranged at positions same as the positions of the plurality of divided cores in the circumferential direction and the radial direction; and
a second coupling portion integral with the plurality of second core portions, the second coupling portion coupling the plurality of second core portions in the circumferential direction, and
the second coupling portion is provided on an outer peripheral part of the second ring-shaped core.

7. The rotor according to claim 6, wherein
the second ring-shaped core is provided on end surfaces of the plurality of divided cores on one of the first side and the second side in the lamination direction.

8. The rotor according to claim 7, wherein
the second ring-shaped core is provided on end surfaces of the plurality of divided cores on the other of the first side and the second side in the lamination direction.

9. The rotor according to any one of claims 6 to 8, wherein
the second ring-shaped core
is provided at a position between an end surface of each of the plurality of divided cores on the first side in the lamination direction and an end surface of each of the plurality of divided cores on the second side in the lamination direction, the position being identical in the lamination direction among the plurality of the divided cores, and
is in a state where the third electric steel sheet is sandwiched between predetermined two of the plurality of first electric steel sheets in the plurality of divided cores.

10. A rotary machine comprising:
the rotor according to any one of claims 1 to 9; and
a stator.
